# EUROPÄISCHE PATENTSCHRIFT

(11) **EP 3 820 006 B1**
(45) Veröffentlichungstag und Bekanntmachung des Hinweises auf die Patenterteilung: **02.03.2022**
(21) Anmeldenummer: 19207945.7
(22) Anmeldetag: 08.11.2019
(51) Int. Cl.: H02G 1/12

(54) **VERFAHREN ZUM ENTFERNEN EINER KABELFOLIE**
METHOD FOR REMOVING A CABLE FILM
PROCÉDÉ D'ENLÈVEMENT D'UNE FEUILLE POUR CÂBLE

(43) Veröffentlichungstag der Anmeldung: 12.05.2021
(73) Patentinhaber: Gebauer & Griller Kabelwerke Gesellschaft m.b.H., 1190 Wien (AT)
(72) Erfinder: Rebel, Daniel, 2225 Zistersdorf (AT); Walker, Bernhard, 1120 Wien (AT); Manhart, Jakob, 2372 Gießhübl (AT); Habermann, Erich, 2171 Herrnbaumgarten (AT); Veit, Stefan, 2251 Ebenthal (AT); Weber, Arthur, 2225 Zistersdorf (AT); Lenormant, Thibaut, 1030 Wien (AT)
(74) Vertreter: KLIMENT & HENHAPEL

(56) Entgegenhaltungen:
- EP-A1- 3 312 956
- EP-A1- 3 444 911
- WO-A1-2020/188456
- CN-U- 207 765 892
- DE-B3-102017 221 115
- JP-A- 2018 207 624

## Beschreibung

Die Erfindung betrifft ein Verfahren zum Entfernen eines Abschnitts einer Kabelfolie von einem Endabschnitt eines Kabels, wobei das Kabel einen Kabelmantel sowie zumindest eine elektrisch leitfähige Leiterstruktur und die auf einer der Leiterstrukturen aufgebrachte Kabelfolie aus einem Kunststoff umfasst sowie eine Bearbeitungsvorrichtung zur Durchführung des Verfahrens.

Unter dem Begriff elektrisch leitfähige Leiterstruktur bzw. Leiterstruktur wird dabei im Lichte der gegenständlichen Anmeldung eine, vorzugsweise metallische, Struktur verstanden, welche geeignet ist elektrischen Strom zu leiten und in welche mittels eines elektromagnetischen Felds Kreisströme bzw. Wirbelströme induziert werden können. Entsprechend umfasst der Begriff Leiterstruktur sowohl Innenleiter, wie beispielsweise Vollleiter oder Litzenleiter, als auch äußere Leiterstrukturen, wie beispielsweise Leitergeflechte oder elektrisch leitfähige Folien, vorzugsweise Metallfolien.

### STAND DER TECHNIK

In der Regel umfassen Kabel, insbesondere wenn sie einen Innenleiter als innere Leiterstruktur und eine oder mehrere äußere Leiterstrukturen umfassen, eine oder mehrere weitere Isolationsschichten, wobei die äußere Isolationsschicht als Kabelmantel bezeichnet wird. Zwischen einer der Leiterstrukturen und der darüber liegenden Isolationsschicht kann eine Kabelfolie aus Kunststoff angeordnet sein, welche zum mechanischen Schutz, zur elektromagnetischen Abschirmung oder zum Feuchtigkeitsschutz dienen kann. Insbesondere bei Kabeln, welche einen Innenleiter und ein Schirmgeflecht als äußere Leiterstruktur umfassen, kann die Kabelfolie zwischen Schirmgeflecht und Kabelmantel angeordnet sein, um ein Abziehen des Kabelmantels zu ermöglichen, da sich der Kabelmantel ohne Kabelfolie mit dem darunter liegenden Schirmgeflecht verhaken würde.

Um die unter der Kabelfolie liegenden Leiterstruktur freizulegen, sodass die Leiterstruktur beispielsweise kontaktiert werden kann, sind - aufgrund der geringen Stärke der Kabelfolie im Vergleich zu Kabelmantel, Innenleiter oder weiteren Isolationsschichten - spezielle Maßnahmen erforderlich, da ein einfaches Einschneiden eine darunter liegende Leiterstruktur, insbesondere ein Schirmgeflecht, und/oder eine, insbesondere unterhalb der Leiterstruktur liegende, Isolationsschicht beschädigen könnte.

In diesem Zusammenhang wird unter dem Begriff Endabschnitt eines Kabels jener Bereich eines Kabels verstanden, welcher sich von einem Ende entlang einer Kabelachse zumindest über jenen Bereich erstreckt, in welchem die Leiterstrukturen zur Kontaktierung freigelegt sind oder freigelegt werden sollen. Man spricht auch von einem Kontaktierungsabschnitt oder einem abisolierten bzw. abzuisolierenden Abschnitt des Kabels. In der Regel umfasst der Endabschnitt auch noch einen an den abisolierten Abschnitt des Kabels grenzenden Abschnitt, in welchem der Kabelmantel intakt ist, welcher vorzugsweise zwischen 1 cm und 25 cm, besonders bevorzugt zwischen 5 cm und 15 cm, lang ist. Der zu entfernende Abschnitt der Kabelfolie erstreckt sich dabei üblicher Weise über einen Teil des Endabschnitts des Kabels, vorzugsweise beginnend am Kabelende des Endabschnitts.

Die EP 3 444 911 A1 offenbart ein Verfahren zum Entfernen einer Kabelfolie, bei welcher zuerst ein zu bearbeitender Abschnitt der Kabelfolie freigelegt wird und dieser freigelegte Abschnitt nachfolgend im Bereich einer vorgesehenen Rissposition einer thermischen, abrasiven oder chemischen Behandlung unterzogen wird. Für die thermische Behandlung wird ein erhitztes Formwerkzeug oder ein Heizdraht erwähnt, mittels welcher die Kabelfolie an- oder abgeschmolzen werden kann.

Die JP 2018 207624 A offenbart eine Vorrichtung mittels welcher ein Abschnitt eines Kabelmantels eines Kabels durch eine entsprechende Trennvorrichtung freigelegt wird und nachfolgend eine ein Heizelement und eine Energieversorgungseinrichtung umfassende Brennvorrichtung an die freigelegte Kabelfolie herangeführt wird, um diese und gegebenenfalls einen verbliebenen Rest des Kabelmantels abzubrennen.

Die DE 10 2017 221115 B3 zeigt eine Vorrichtung mittels welcher ein endseitiger Teilabschnitt eines Kabelmantels eines Kabels durch induktive Erhitzung erweicht wird, um den Teilabschnitt durch ein Abisolierwerkzeug mechanisch zu entfernen.

Die CN 207 765 892 U offenbart eine Vorrichtung zum Abisolieren eines Kabels, bei welcher das Kabel durch eine Heizspule geführt ist, um darin den Kabelmantel aufzuweichen und dadurch die Schneiden der Abisoliermesser zu schonen und ihre Abnutzung zu verringern.

Ein Nachteil des Stands der Technik äußert sich nun darin, dass zur Entfernung des zu entfernenden Abschnitts der Kabelfolie einerseits zwingend der Kabelmantel teilweise entfernt werden muss. Andererseits erfordert das vorgeschlagene Verfahren eine komplizierte Vorrichtung, welche entweder eine Drehung des Kabels zur gleichmäßigen Erhitzung erfordert oder ein speziell auf das zu bearbeitende Kabel angepasstes erhitzbares Formwerkzeug.

### AUFGABE DER ERFINDUNG

Es ist daher eine Aufgabe der Erfindung die Nachteile des Stands der Technik zu überwinden und ein Verfahren sowie eine Bearbeitungsvorrichtung vorzuschlagen, welche eine einfache, sichere und schnelle Entfernung eines zu entfernenden Abschnitts einer Kabelfolie für Endabschnitte von Kabeln mit unterschiedlichen Durchmessern ermöglicht. Eine weitere Aufgabe besteht darin, eine abschnittsweise Entfernung der Kabelfolie zu ermöglichen, ohne dass die Kabelfolie vor der Behandlung freigelegt werden muss.

### DARSTELLUNG DER ERFINDUNG

Diese Aufgabe wird in einem erfindungsgemäßen Verfahren zum Entfernen eines zu entfernenden Abschnitts einer Kabelfolie von einem Endabschnitt eines eine Kabelachse aufweisenden Kabels erreicht, welches die Merkmale des unabhängigen Anspruchs 1 oder des unabhängigen Anspruchs 2 umfasst.

Die erfindungsgemäße Lösung zeichnet sich dadurch aus, dass die gezielte Schädigung der Kabelfolie in einem definierten Schädigungsbereich nicht durch direkte Wärmebeaufschlagung erfolgt, sondern dass die - bezogen auf die Kabelachse - unterhalb der Kabelfolie liegenden Leiterstruktur induktiv und somit berührungsfrei erhitzt wird. Es ist durch den induktiven Wärmeeintrag möglich, die Wärme direkt in jenem Bereich zu erzeugen, in welchem sie zur Vorschädigung der Kabelfolie benötigt wird. Andere Bereiche des Kabels, insbesondere der Kabelmantel, werden dabei nicht oder zumindest nicht signifikant erwärmt. Weiters erfolgt der Wärmeeintrag völlig berührungsfrei, sodass es nicht erforderlich ist den Kabelmantel im Schädigungsbereich vor der Wärmebehandlung zu entfernen. Gleichfalls führt die berührungsfreie Erhitzung dazu, dass es beim Entfernen der Kabelfolie zu keiner mechanischen Beschädigung der unteren Schicht bzw. Schichten kommt. Es versteht sich jedoch von selbst, dass die induktive Erhitzung auch auf einer bereits freigelegten Kabelfolie angewendet werden kann, auch wenn dies erfindungsgemäß nicht vorgesehen ist.

Ein weiterer Vorteil des erfindungsgemäßen Verfahrens besteht darin, dass durch die induktive Erhitzung in einfacher Art und Weise die Kabelfolie in einem genau definierten Schädigungsbereich erhitzt werden kann, wobei sich der Schädigungsbereich der Kabelfolie - ohne dass eine weitere Manipulation des Kabels notwendig ist - bezogen auf einen Querschnitt des Kabels vorzugsweise über den gesamten Umfang erstreckt. Mit anderen Worten ist durch die induktive Erhitzung, mittels welcher die Leiterstruktur in einem definierten Bereich im Wesentlichen gleichmäßig aufgeheizt werden kann, eine vollumfängliche thermische Schädigung der Kabelfolie möglich.

Es soll dabei nicht unerwähnt bleiben, dass je nach spezifischem elektrischen Widerstand der Leiterstruktur die Induktionsparameter, wie Heizleistung und Haltezeit, entsprechend gewählt werden können, um die Eindringtiefe und die Temperatur einzustellen. Weitere Parameter, welche zur Beeinflussung der Induktionsparameter herangezogen werden können, sind die Frequenz und Amplitude des durch den Induktor fließenden Wechselstroms sowie die geometrische Gestaltung des Induktors. Der Schädigungsbereich kann dabei durch die Einstellung jenes Bereichs, in welchem die maximale Temperatur erreicht wird, besonders genau definiert werden.

Durch die gezielte thermische Schädigung der Kabelfolie im Schädigungsbereich wird jene Position des Kabels festgelegt, in welcher die Kabelfolie und/oder gegebenenfalls die darunter liegende Leiterstruktur, wenn diese ebenfalls entfernt werden soll, beim Abziehen einreißt. Das Relativbewegen der Kabelfolie gegenüber einer der Leiterstrukturen, vorzugsweise gegenüber der freizulegenden Leiterstruktur, kann durch Abziehen der Kabelfolie bewerkstelligt werden. Beim Abziehen wird die Kabelfolie direkt oder unter Zwischenlage einer weiteren Schicht in Richtung der Kabelachse, sprich in Richtung einer Stirnseite des Endabschnitts, auch Kabelende genannt, bewegt. Es ist jedoch auch denkbar, dass die Relativbewegung eine Torsionsbewegung oder eine Knickbewegung ist, durch welche sich der Riss ausbildet. In einem weiteren Schritt kann der durch den Riss definierte zu entfernende Abschnitt, vorzugsweise durch Abziehen, vom Kabel entfernt werden. Es ist dabei nicht zwingend erforderlich, dass die Schritte der induktiven Erhitzung und des Relativbewegens unmittelbar nacheinander im selben Bearbeitungsraum erfolgen, da diese Schritte auch in verschiedenen Bearbeitungsräumen, etwa die induktive Erhitzung in einem Bearbeitungsraum einer Induktionseinheit und die Relativbewegung in einem weiteren Bearbeitungsraum einer Abmantelungseinrichtung, räumlich getrennt voneinander durchgeführt werden können.

Unter dem Begriff "thermisch geschädigt" ist sowohl ein Anschmelzen, Aufschmelzen oder Plastifizieren der Kabelfolie als auch ein Abbrennen, ein Verbrennen, ein Verspröden oder eine Degradierung der Kabelfolie zu verstehen, wobei die Art der thermischen Schädigung im Wesentlichen vom Material der Kabelfolie sowie der Dauer und der Höhe der Wärmeeinbringung abhängig ist. Ist die Kabelfolie im Schädigungsbereich nach der induktiven Wärmebehandlung geschmolzen, teilweise geschmolzen, versprödet oder wiedererstarrt, so bildet sich der Riss bei der Relativbewegung bzw. beim Abziehen in der Kabelfolie aus. Ist die Kabelfolie durch die Erhitzung verbrannt bzw. abgebrannt, so liegt der Riss bereits vor dem Abziehen vor und wird durch das Abziehen lediglich vergrößert.

So ist es beispielsweise denkbar, dass durch die induktive Erhitzung eine als Innenleiter ausgebildete Leiterstruktur erhitzt wird, um eine auf dem Innenleiter aufgebrachte Kabelfolie im Schädigungsbereich zumindest teilweise aufzuschmelzen, um die Kabelfolie vom Innenleiter entfernen zu können.

Ebenfalls versteht es sich von selbst, dass die induktive Erhitzung jener Leiterstruktur, auf der die Kabelfolie aufgebracht ist, auch dann erfolgen kann, wenn das Kabel zwei oder mehrere Leiterstrukturen umfasst. Dabei kann es auch zu einer induktiven Erhitzung jener Leiterstrukturen kommen, auf denen keine Kabelfolie aufgebracht ist. Aufgrund der geringen Dicke der Kabelfolie kommt es jedoch zu einer definierten Schädigung im Bereich der Kabelfolie während andere Schichten in der Regel nicht signifikant beeinflusst werden. Weiters kann die Erhitzung jener Leiterstrukturen, auf denen keine Kabelfolie aufgebracht ist, durch geeignete Wahl der Induktionsparameter reduziert werden, wobei insbesondere der Skin-Effekt bei hohen Frequenzen ausgenützt werden kann.

Das Kabel weist eine Kabelachse auf, welche bezogen auf einen Querschnitt des Kabels die Symmetrieachse darstellt. Es versteht sich dabei von selbst, dass die Kabelachse jeweils normal auf den entsprechenden Querschnitt des Kabels steht und entsprechend auch kurvenförmig verlaufen kann, wenn das Kabel gebogen ist. In der Regel ist der Endabschnitt des Kabels nicht gebogen, sodass die Kabelachse im Endabschnitt geradenförmig verläuft.

In einer weiteren Ausführungsvariante der Erfindung ist vorgesehen, dass sich die zumindest eine Leiterstruktur aus einem Innenleiter und zumindest einer äußeren Leiterstruktur zusammensetzt, wobei die Kabelfolie auf einer der äußeren Leiterstrukturen aufgebracht ist. Bevorzugt ist die Kabelfolie auf der bezogen auf die Kabelachse äußersten Leiterstruktur aufgebracht, wenn mehr als eine äußere Leiterstruktur vorgesehen ist. Es ist jedoch auch denkbar, dass die Kabelfolie auf einer weiter innen liegenden äußeren Leiterstruktur oder auf dem Innenleiter aufgebracht ist. Gleichfalls ist es denkbar, dass auf mehreren der Leiterstrukturen eine Kabelfolie aufgebracht ist. In allen vorgenannten Fällen ist es vorteilhaft, wenn die Bearbeitung von außen nach innen erfolgt, wobei die unterschiedlichen Bearbeitungsabschnitte in der Regel stufenweise versetzt sind. Es versteht sich dabei von selbst, dass die Kabelfolie auf der äußeren Leiterstruktur aufgebracht ist, wenn lediglich eine äußere Leiterstruktur vorhanden ist.

Ebenfalls kann vorgesehen sein, dass in diesem Fall auch jene Leiterstrukturen, auf denen keine Kabelfolie aufgebracht ist, durch die induktive Erhitzung erwärmt werden können, wodurch sich gegebenenfalls auch kumulative Effekte erreichen lassen können, wenn zwei äußere Leiterstrukturen direkt übereinander angeordnet sind. Beispielsweise kann die zumindest eine äußere Leiterstruktur ein Metallgeflecht, wie beispielsweise ein Schirmgeflecht, und/oder eine Metallfolie umfassen, insbesondere aus einem Schirmgeflecht und/oder einer Metallfolie bestehen. So ist es etwa denkbar, dass die Kabelfolie auf das Metallgeflecht, insbesondere auf das Schirmgeflecht, aufgebracht ist bzw. das Schirmgeflecht umhüllt und durch das Schirmgeflecht induktiv erhitzt wird, sodass die Kabelfolie zumindest teilweise thermisch geschädigt wird.

Eine bevorzugte Ausführungsvariante des erfindungsgemäßen Verfahrens sieht vor, dass jene äußere Leiterstruktur, auf welche die Kabelfolie aufgebracht ist, als Metallfolie ausgebildet ist. Durch die verhältnismäßig geringe Dicke der Metallfolie lässt sich diese durch entsprechende Einstellung der Eindringtiefe der induktiven Erhitzung besonders effizient erhitzen. Vorzugsweise handelt es sich bei der Metallfolie um eine Aluminium enthaltende Folie bzw. eine Aluminiumfolie. Dadurch, dass die Metallfolie eine geringe Dicke aufweist und daher in der Regel einen geringen Zugwiderstand bzw. Scherwiderstand aufweist und dass die Kabelfolie im Schädigungsbereich thermisch geschädigt wird, sodass auch die Kabelfolie im Schädigungsbereich keinen nennenswerten steigernden Einfluss mehr auf Zug- und Scherwiderstand hat, führt der Riss in der Kabelfolie bei der Relativbewegung ebenfalls zu einer Rissbildung bzw. Schädigung der Metallfolie im Schädigungsbereich.

Eine Kombination von Metallfolie und Kabelfolie wird oftmals in Koaxialkabeln verwendet, welche als äußere Leiterstruktur auch ein Schirmgeflecht zur elektromagnetischen Abschirmung aufweisen. Somit kann in einer besonders bevorzugten Ausführungsvariante vorgesehen sein, dass die zumindest eine äußere Leiterstruktur ein Schirmgeflecht und eine Metallfolie umfasst, wobei die Metallfolie direkt auf dem Schirmgeflecht angeordnet ist. Die Kabelfolie wiederum ist direkt auf der Metallfolie aufgebracht. In diesem Anwendungsfall kann es durch die induktive Erhitzung zu einem kumulativen Erwärmungseffekt von Schirmgeflecht und Metallfolie kommen, jedoch steht die erreichbare Erhitzung der äußeren Leiterstruktur in der Regel im Verhältnis zur möglichen Eindringtiefe, sodass die Metallfolie aufgrund der geringeren Dicke stärker erhitzt wird als das Schirmgeflecht.

Insbesondere ist es bevorzugt, besonders für die Verwendung in Koaxialkabeln, wenn die Metallfolie und die Kabelfolie als Verbundfolie ausgebildet sind.

In einer weiteren Ausführungsvariante der Erfindung ist vorgesehen, dass die als Metallfolie ausgebildete äußere Leiterstruktur durch die induktive Erhitzung im Schädigungsbereich strukturell geschwächt wird. Wenn die äußere Leiterstruktur, auf welcher die Kabelfolie aufgebracht ist, als Metallfolie ausgebildet ist, so ist es vorteilhaft, wenn die Metallfolie gemeinsam mit der Kabelfolie abgezogen wird. Entsprechend führt eine Ausdehnung des Schädigungsbereichs von der Kabelfolie auf die Metallfolie durch die strukturelle Schwächung der Metallfolie dazu, dass sich auch in der Metallfolie beim Abziehen im Schädigungsbereich ein definierter Riss ausbildet, sodass Metallfolie und Kabelfolie gemeinsam abgezogen werden können, ohne dass Reste auf der darunterliegenden Schicht verbleiben, welche einer etwaigen Kontaktierung hinderlich wären.

Besonders einfach lässt sich zumindest die entsprechende Leiterstruktur induktiv erhitzen, wenn die induktive Erhitzung mittels einer Induktionsspule erfolgt, mittels welcher Induktionsspule ein elektromagnetisches Wechselfeld erzeugt wird, wobei zumindest der Schädigungsbereich des Kabels während der induktiven Erhitzung innerhalb der Induktionsspule angeordnet wird. Durch die Erzeugung eines elektromagnetischen Wechselfelds in einer, vorzugsweise wassergekühlten, Induktionsspule, können als relevante Parameter für die induktive Erhitzung die Frequenz und Amplitude des durch die Induktionsspule fließenden Wechselstroms angesehen werden. Durch die Verwendung einer Induktionsspule lässt sich auch in besonders einfacher Weise die vollumfängliche Schädigung der Kabelfolie sicherstellen, da zumindest ein Bereich des Endabschnitts des Kabels während der Erhitzung in der Induktionsspule angeordnet ist und die entsprechende Leiterstruktur entsprechend über den gesamten Umfang gleichförmig erhitzt wird.

Schließlich lässt sich durch die Verwendung einer Induktionsspule, in welcher das zu bearbeitende Kabel zumindest abschnittsweise eingeführt ist, die induktive Erhitzung für eine Vielzahl von unterschiedlichen Kabeldurchmessern bzw. Kabelarten anwenden, solange ein erforderlicher Abstand zwischen Innendurchmesser der Induktionsspule und Außendurchmesser des aufgenommenen Kabelabschnitts eingehalten wird, welcher Abstand beispielsweise als Luftspalt ausgebildet sein kann oder durch ein nichtleitendes Material ausgefüllt sein kann. Dazu ist es in der Regel lediglich erforderlich die Parameter des erzeugten elektromagnetischen Wechselfelds, vorzugsweise über Einstellung von Amplitude und Frequenz des Erregerstroms, bzw. die Eindringtiefe, die Haltezeit und/oder die Heizleistung anzupassen.

Wenngleich es grundsätzlich auch denkbar ist, dass die induktive Erhitzung auch auf einer bereits freigelegten Kabelfolie angewendet werden kann, ist es vorteilhaft, wenn die Wärmebehandlung durchgeführt werden kann, ohne dass dafür der Kabelmantel im Schädigungsbereich entfernt werden muss. Entsprechend ist erfindungsgemäß weiters vorgesehen, dass die Kabelfolie im Schädigungsbereich während der induktiven Erhitzung der zumindest einen Leiterstruktur vom Kabelmantel abgedeckt wird. Mit anderen Worten ist der Kabelmantel im Schädigungsbereich bzw. im in die Induktionsspule eingeführten Abschnitt des Kabels unversehrt, sodass die Kabelfolie im Inneren des Kabels erhitzt wird. Dies ist nur dank der induktiven Erhitzung der unterhalb der Kabelfolie liegenden Leiterstruktur möglich, da mittels der induktiven Erhitzung die erforderliche Aufheizung nicht von außen erfolgt, sondern direkt dort, wo die Hitze benötigt wird. Anders ausgedrückt wird die Leiterstruktur, auf der die Kabelfolie aufgebracht ist, durch den Kabelmantel hindurch induktiv erhitzt, um den Schädigungsbereich zu erzeugen.

Um eine Bearbeitung des Kabelmantels zu ermöglichen, sodass der Kabelmantel im Rahmen des Verfahrens von einem abzuisolierenden Abschnitt des Kabelendabschnitts entfernt werden kann, sieht die Erfindung vor, dass das Verfahren weiters den folgenden Schritt umfasst:
- zumindest teilweises umlaufendes Einschneiden des Kabelmantels an einer Position, welche näher an einem Kabelende des Endabschnitts des Kabels, sprich einer Stirnfläche des Endabschnitts, angeordnet ist als der Schädigungsbereich. Durch das Einschneiden des Kabels an einer Position, die zwischen dem Kabelende, sprich der Stirnseite des Endabschnitts des Kabels, und dem Schädigungsbereich liegt, wird erreicht, dass die Stelle, an der die Kabelfolie bzw. gegebenenfalls Kabelfolie und Metallfolie beim Abziehen reißt unterhalb des Kabelmantels liegt. So kann verhindert werden, dass etwaige beim Einreißen zurückbleibende Reste der Kabelfolie nach der Entfernung des zu entfernenden Abschnitts des Kabelmantels auf der freigelegten Leiterstruktur verbleiben, da diese Reste aufgrund der Schnittposition durch den verbleibenden Abschnitt des Kabelmantels verdeckt werden.

Besonders vorteilhaft ist die oben beschriebene Positionierung des Einschnitts, wenn das Kabel drei Leiterstrukturen, nämlich einen Innenleiter, ein Schirmgeflecht und eine Metallfolie, umfasst, wobei Schirmgeflecht, Metallfolie und Kabelfolie unmittelbar in dieser Reihenfolge übereinander angeordnet sind, es sich also um ein Koaxialkabel handelt. Dies deshalb, da etwaig auf dem Schirmgeflecht verbleibende Reste von Metallfolie und/oder Kabelfolie die Kontaktierung des Schirmgeflechts behindern könnten. Durch die Wahl der Einschneide-Position sind solche Reste von Kabelfolie und/oder Metallfolie auf dem Schirmgeflecht durch den Kabelmantel verdeckt, sodass der tatsächlich freigelegte Abschnitt des Schirmgeflechts rückstandsfrei ist.

Es ist dabei genauso denkbar, dass das Einschneiden bereits vor dem induktiven Erhitzen des Schädigungsbereichs, gegebenenfalls bereits vor dem Einführen des Endabschnitts in den Bearbeitungsraum einer, Bearbeitungsvorrichtung, erfolgt, wie es denkbar ist, dass das Einschneiden während oder nach der induktiven Wärmebehandlung des Schädigungsbereichs erfolgt. Beispielsweise kann das Einschneiden in einem weiteren Bearbeitungsraum einer Schneideinrichtung erfolgen. Schließlich ist die Entfernung des Kabelmantels kein erforderlicher Schritt für die Durchführung der Wärmebehandlung.

Wenngleich es - wie zuvor beschrieben - erfindungsgemäß vorgesehen ist, dass der Abstand zwischen der Position des Einschnitts und dem Kabelende geringer ist als der Abstand zwischen Schädigungsbereich und Kabelende, ist es natürlich auch denkbar, aber nicht in den Ansprüchen der vorliegenden Patentschrift beansprucht, dass der Schädigungsbereich in einer nicht beanspruchten Ausführungsvariante näher oder gleich nah am Kabelende angeordnet ist als der Einschnitt, sodass gegebenenfalls ein Abschnitt der Kabelfolie nach dem Abziehen des Kabelmantels freigelegt wird.

Besonders einfach kann die Kabelfolie dadurch entfernt werden, dass sie gemeinsam mit dem unmittelbar darüber liegenden Kabelmantel vom Endabschnitt des Kabels abgezogen wird, da die Kabelfolie in der Regel eine erhöhte Haftung am Kabelmantel aufweist. Wird also der Kabelmantel, bevorzugt wie oben beschrieben, eingeschnitten, so kann der Kabelmantel mit entsprechenden Mitteln relativ zu einer der Leiterstrukturen, insbesondere relativ zum Innenleiter, bewegt werden, wobei die darunter liegende Kabelfolie bzw. die darunter liegende Kabelfolie und/oder die unterhalb der Kabelfolie liegende Metallfolie im Schädigungsbereich einreißen und gemeinsam mit dem Kabelmantel abgezogen werden können. Bei der Relativbewegung kann es sich wiederum um eine Knickbewegung, eine Drehbewegung und/oder eine Abziehbewegung, also eine Bewegung in Richtung der Kabelachse hin zum Kabelende des Endabschnitts, handeln. Die gemeinsame Entfernung von zu entfernendem Abschnitt des Kabelmantels und zu entfernendem Abschnitt der Kabelfolie erfolgt durch Abziehen des zu entfernenden Abschnitts des Kabelmantels. Daher sieht eine weitere Ausführungsvariante der Erfindung vor, dass der Kabelmantel durch einen zumindest teilweise umlaufenden, vorzugsweise vollständig umlaufenden, Einschnitt in einen zu entfernenden Abschnitt des Kabelmantels und einen verbleibenden Abschnitt des Kabelmantels unterteilt ist und dass der zu entfernende Abschnitt des Kabelmantels in Richtung der Kabelachse bewegt wird, wobei durch die Bewegung der zumindest teilweise am Kabelmantel anhaftende zu entfernende Abschnitt der Kabelfolie abgezogen wird.

Wenngleich es grundsätzlich denkbar ist, dass die zuvor beschriebenen Verfahrensschritte in unterschiedlichen Bearbeitungsräumen sequentiell hintereinander ausgeführt werden, ist es besonders vorteilhaft, wenn die entsprechenden Schritte in einem Bearbeitungsraum einer gemeinsamen Bearbeitungsvorrichtung, welche in der Folge im Detail beschrieben wird, durchgeführt werden. Gemäß einer weiteren Ausführungsvariante der Erfindung ist daher vorgesehen, dass die Schritte
- induktives Erhitzen zumindest jener Leiterstruktur auf welcher die Kabelfolie aufgebracht ist;
- zumindest teilweises umlaufendes Einschneiden des Kabelmantels;
- gemeinsames Entfernen eines zu entfernenden Abschnitts des Kabelmantels und des zu entfernenden Abschnitts der Kabelfolie, vorzugsweise durch Abziehen, in einem Bearbeitungsraum einer Bearbeitungsvorrichtung durchgeführt werden.

Als besonders vorteilhaft hat es sich erwiesen, dass die Kabelfolie auf eine in einem bevorzugten Temperaturbereich liegende Temperatur erhitzt wird, welche Temperatur durch die Temperatur der darunter liegenden induktiv erhitzten Leiterstruktur eingestellt werden kann. Daher ist in einer weiteren Ausführungsvariante vorgesehen, dass die zumindest eine Leiterstruktur auf eine Temperatur größer gleich 80°C, bevorzugt größer gleich 100°C, besonders bevorzugt größer gleich 200°C, insbesondere größer gleich 300°C, induktiv erhitzt wird. Die Messung der Temperatur kann beispielsweise mittels eines Pyrometers erfolgen. Die Temperatur der induktiv erhitzten Leiterstruktur und die Dauer der induktiven Erhitzung, beispielsweise weniger als 30 s, insbesondere weniger als 20 s, bevorzugt weniger als 10 s, können in Abhängigkeit von Materialeigenschaften der Kabelfolie, beispielsweise der Dicke und/oder der Art des Kunststoffes, eingestellt werden, um die thermische Schädigung zu erreichen.

Die eingangs erwähnte Aufgabe wird auch gelöst durch eine Bearbeitungsvorrichtung zur Durchführung des erfindungsgemäßen Verfahrens gemäß Anspruch 10.

Neben den eingangs erwähnten Vorteilen der induktiven Erhitzung der zumindest einen Leiterstruktur zur Erzeugung eines Schädigungsbereichs in der Kabelfolie bzw. gegebenenfalls in Kabelfolie und darunter liegender Metallfolie, wird durch die Kombination von induktiver Wärmebehandlung und Abziehen der Kabelfolie in einer Bearbeitungsvorrichtung die Anzahl der notwendigen Manipulationsvorgänge reduziert und eine effiziente Entfernung der Kabelfolie ermöglicht. Dabei ist es für einen Bearbeitungsvorgang lediglich erforderlich, den zu bearbeitenden Abschnitt des Kabels in die Induktionsspule einzuführen. Es ist jedoch denkbar, dass der zu entfernende Abschnitt der Kabelfolie durch die vorgesehenen Mittel nicht vollständig sondern nur teilweise abgezogen wird.

Bei den Mitteln zum Abziehen des zu entfernenden Abschnitts der Kabelfolie kann es sich beispielsweise um translatorisch bewegbare Greif- und/oder Bewegungselemente handeln, welche die Kabelfolie direkt fassen und relativ zu einer unter der Kabelfolie liegenden Schicht, beispielsweise zu einem Innenleiter oder einem Schirmgeflecht, verschieben und/oder verdrehen können. Es ist dabei denkbar, dass durch die Mittel zum Abziehen mehrere Bewegungen hintereinander durchgeführt werden können, beispielsweise eine Verdreh- oder Knickbewegung zur Herstellung eines Risses im Schädigungsbereich der Kabelfolie und eine nachfolgenden lineare Abziehbewegung zur Entfernung des zu entfernenden Abschnitts der Kabelfolie, gegebenenfalls gemeinsam mit einem zu entfernenden Abschnitt des Kabelmantels. Ebenfalls ist es denkbar, dass die Mittel zum Abziehen als entsprechend ausgebildete Kabelfolienentfernungs-Einrichtung ausgebildet sind.

Es ist jedoch, wie in der Folge näher beschrieben, nicht zwingend erforderlich, dass die Mittel zum Abziehen der Kabelfolie die Kabelfolie direkt kontaktieren. So können die Mittel zum Abziehen der Kabelfolie beispielsweise durch eine Schneideinheit zur Herstellung eines Einschnittes im Kabelmantel ausgebildet sein, welche nach dem Einschnitt auch eine Relativbewegung in Richtung der Kabelachse ausführen kann.

Mit anderen Worten kann es sich bei dem Mittel zum Abziehen der Kabelfolie um eine Einrichtung handeln, welche derart ausgebildet ist, dass zumindest der zu entfernende Abschnitt der Kabelfolie, vorzugsweise gemeinsam mit einem zu entfernenden Abschnitt des Kabelmantels, relativ zu einer der Leiterstrukturen, vorzugsweise relativ zu einem Metallgeflecht oder dem Innenleiter, bewegt werden kann, sodass sich zumindest in der Kabelfolie im Schädigungsbereich ein Riss ausbildet.

Die Mittel zum Abziehen eines Abschnitts der Kabelfolie müssen dabei, insbesondere wenn die Bearbeitungsvorrichtung als Anlage mit mehreren Teileinrichtungen ausgebildet ist, nicht zwingend in jenem Bearbeitungsraum angeordnet sein, in welchem auch die Induktionsspule angeordnet ist. So ist es auch denkbar, dass die Mittel zum Abziehen eines Abschnitts der Kabelfolie beispielsweise in einem weiteren Bearbeitungsraum einer Abmantelungseinrichtung der Bearbeitungsvorrichtung, vorzugsweise der Anlage, angeordnet sind.

Grundsätzlich können in einer solchen Vorrichtung sowohl Endabschnitte eines Kabels behandelt werden, in denen die Kabelfolie bereits durch Entfernung des Kabelmantels freigelegt wurde als auch Endabschnitte von Kabeln mit intaktem Kabelmantel bearbeitet werden, sofern entweder eine Schneideinheit vorgesehen ist oder der Kabelmantel vor dem Einführen in die Bearbeitungsvorrichtung bereits eingeschnitten wurde.

Es soll auch nicht unerwähnt bleiben, dass eine Induktionsspule, welche eingerichtet ist, um eine Leiterstruktur induktiv zu erhitzen, sodass die auf der erhitzten Leiterstruktur aufgebrachte Kabelfolie in einem Schädigungsbereich zumindest teilweise thermisch geschädigt wird, in der Regel auch geeignet ist, eine auf der erhitzten Leiterstruktur aufgebrachte nichtmetallische Zwischenschicht zu erhitzen und thermisch zu schädigen, welche nicht aus Kunststoff bestehen. Beispielsweise kann es sich bei solchen nichtmetallischen Zwischenschichten um, vorzugsweise mit Harz getränkte, Gewebestrukturen, beispielsweise aus Stoffen wie Baumwolle oder aus Papier, handeln. Derartige nichtmetallische Zwischenschichten sind üblicher Weise ausgelegt, um eine darunter liegende als Metallfolie ausgebildete äußere Leiterstruktur vor dem Reißen zu schützen. Ebenfalls ist eine entsprechend ausgebildete Induktionsspule auch geeignet sein kann, um eine auf der erhitzten Leiterstruktur aufgebrachte Klebeschicht thermisch zu schädigen.

In einer weiteren Ausführungsvariante der Erfindung ist vorgesehen, dass im Bearbeitungsraum zumindest eine Klemmeinheit zur Fixierung des Endabschnitts des Kabels während des Bearbeitungsvorganges angeordnet ist. Die zumindest eine Klemmeinheit umfasst vorzugsweise zumindest ein Klemmelement, welches vorzugsweise aus Kunststoff gefertigt ist, um im Nahbereich der Induktionsspule positioniert werden zu können. Mittels der Klemmeinheit kann der Endabschnitt des Kabels effizient fixiert werden, um sowohl die induktive Wärmebehandlung als auch das Relativbewegen der Kabelfolie relativ zu einer der Leiterstrukturen, vorzugsweise relativ zu einem Innenleiter, zu ermöglichen, ohne dass sich das Kabel dabei relativ zum Bearbeitungsraum bewegt.

Gemäß einer der Erfindung ist vorgesehen, dass die Bearbeitungsvorrichtung weiters eine Schneideinheit zum zumindest teilweise umlaufenden Einschneiden des Kabelmantels umfasst. Da der Kabelmantel für die Durchführung der induktiven Erhitzung der zumindest einen Leiterstruktur im Schädigungsbereich nicht freigelegt sein muss, kann das Einschneiden und gegebenenfalls nachfolgende Entfernen des Kabelmantels direkt in der Bearbeitungsvorrichtung erfolgen, insbesondere wenn die Mittel zum Abziehen die Schneideinheit umfassen.

Die Schneideinheit kann beispielsweise zumindest ein Schneidelement, vorzugsweise zumindest zwei, genau zwei oder mehr als zwei, Schneidelemente aufweisen, welche während der Schneidbewegung in radialer Richtung in den Kabelmantel eindringen, um einen zumindest teilweise, vorzugsweise vollständig, umlaufenden Einschnitt zu erzeugen.

Die beanspruchte Ausführung der erfindungsgemäßen Bearbeitungsvorrichtung sieht vor, dass die Schneideinheit im Bearbeitungsraum angeordnet ist, wobei der Bearbeitungsraum eine Durchtrittsöffnung für das Kabel aufweist und die Induktionsspule zwischen Schneideinheit und Durchtrittsöffnung angeordnet ist. Vorzugsweise ist die Schneideinheit zwischen den Mitteln zum Abziehen und der Induktionsspule angeordnet.

Durch eine entsprechende Anordnung der Schneideinheit im Bearbeitungsraum, in welchem auch die Induktionsspule angeordnet ist, wird erreicht, dass der teilweise umlaufende Einschnitt im Kabelmantel an einer Position erfolgt, welche näher an einem Kabelende des Kabels angeordnet ist als der durch die induktive Erhitzung der entsprechenden Leiterstruktur erzeugte Schädigungsbereich. Da der Endabschnitt des Kabels in der Regel nur einen kleinen Abschnitt der Gesamtlänge des Kabels ausmacht, ist üblicher Weise eine Durchtrittsöffnung für das Kabel im Bearbeitungsraum vorgesehen, durch welche der zu bearbeitende Abschnitt des Kabels in den Bearbeitungsraum eingeführt werden kann bzw. durch welchen der nicht zu bearbeitende Abschnitt des Kabels aus dem Bearbeitungsraum geführt werden kann. Um also die Position des Einschnitts im Kabelmantel relativ zum Schädigungsbereich, in welchem Kabelfolie bzw. Kabelfolie und Metallfolie beim Abziehen einreißen, für den zu bearbeitenden Endabschnitt eines Kabels in der Bearbeitungsvorrichtung zu definieren, ist die Induktionsspule, welche den Schädigungsbereich erzeugt, zwischen Schneideinheit und Durchtrittsöffnung angeordnet.

Um eine einfache Entfernung des zu entfernenden Abschnitts der Kabelfolie zu ermöglichen, welche einerseits nicht erfordert, dass der Kabelmantel im Schädigungsbereich vor der induktiven Erhitzung der Leiterstruktur entfernt werden muss, und andererseits eine besonders einfache Manipulation ermöglicht, ist gemäß einer weiteren Ausführungsvariante der Erfindung vorgesehen, dass die Mittel zum Abziehen des zu entfernenden Abschnitts der Kabelfolie ausgebildet sind, um einen durch einen Einschnitt definierten zu entfernenden Abschnitt des Kabelmantels zu kontaktieren und nachfolgend den zu entfernenden Abschnitt des Kabelmantels gemeinsam mit einem zu entfernenden Abschnitt der Kabelfolie, welcher vorzugsweise am Kabelmantel anhaftet, mittels einer Abziehbewegung zu entfernen. Der Einschnitt im Kabelmantel kann dabei entweder mit der zuvor erwähnten Schneideinheit vorgenommen werden oder der Einschnitt kann bereits im eingeführten Endabschnitt des Kabels vorhanden sein.

Die Mittel zur Entfernung des Endabschnitts der Kabelfolie können wiederum als Greifelemente oder Schiebeelemente ausgebildet sein, die jedoch nicht die dünne Kabelfolie kontaktieren und fassen müssen, sondern den stärkeren Kabelmantel. Durch das Greifen und Relativbewegen, beispielsweise Schieben, Ziehen, Verdrehen oder Knicken, des zu entfernenden Abschnitts des Kabelmantels relativ zu einer der Leiterstrukturen, vorzugsweise relativ zum Innenleiter, wird auch die darunter liegende und zumindest teilweise am Kabelmantel anhaftende Kabelfolie gespannt, sodass die Kabelfolie im Schädigungsbereich reißt und nachfolgend abgezogen werden kann. Die Abziehbewegung, welche eine Bewegung des zu entfernenden Abschnitts des Kabelmantels in Richtung des Kabelendes umfasst, kann entweder gleichzeitig auch zur Risserzeugung verwendet werden oder erst nach der Risserzeugung, mittels einer zuvor durchgeführten Relativbewegung, erfolgen. Handelt es sich beim induktiv erhitzten Leiter um eine Metallfolie, so kann sich der Riss auch in der Metallfolie ausbilden, sodass Metallfolie und Kabelfolie gemeinsam mit dem zu entfernenden Abschnitt des Kabelmantels von der darunter liegenden Schicht des Kabels, insbesondere von einem Schirmgeflecht, abgezogen werden können, um diese Schicht, insbesondere das Schirmgeflecht, freizulegen.

In einer weiteren Ausführungsvariante der Erfindung ist vorgesehen, dass die Mittel zum Abziehen des zu entfernenden Abschnitts der Kabelfolie im Bearbeitungsraum angeordnet sind. Durch die Anordnung von mehreren Komponenten der Bearbeitungsvorrichtung in jenem Bearbeitungsraum, in welchem die Induktionsspule angeordnet ist, wird eine besonders kompakte Bauweise ermöglicht, welche die Durchführung von mehreren Verfahrensschritten in einem Bearbeitungsraum ermöglicht. Besonders bevorzugt sind daher sowohl die Induktionsspule als auch die Schneideinheit und die Mittel zum Abziehen der Kabelfolie in einem gemeinsamen Bearbeitungsraum angeordnet.

### KURZE BESCHREIBUNG DER FIGUREN

Die Erfindung wird nun anhand von Ausführungsbeispielen näher erläutert. Die Zeichnungen sind beispielhaft und sollen den Erfindungsgedanken zwar darlegen, ihn aber keinesfalls einengen oder gar abschließend wiedergeben.

Dabei zeigt:
- Fig. 1a bis 1c: den schematischen Ablauf des erfindungsgemäßen Verfahrens an Hand eines Endabschnitts eines ersten Ausführungsbeispiels eines Kabels;
- Fig. 2a bis 2c: den schematischen Ablauf eines nicht beanspruchten Verfahrens an Hand des Endabschnitts eines zweiten Ausführungsbeispiels des Kabels;
- Fig. 3a bis 3c: den schematischen Ablauf des erfindungsgemäßen Verfahrens an Hand des Endabschnitts eines dritten Ausführungsbeispiels des Kabels;
- Fig. 4: einen Endabschnitt des Kabels in einer Bearbeitungsvorrichtung;
- Fig. 5: den Endabschnitt des Kabels in der Bearbeitungsvorrichtung nach der induktiven Erhitzung;
- Fig. 6: den Endabschnitt des Kabels nach dem Einschneiden;
- Fig. 7: den Endabschnitt des Kabels in der Bearbeitungsvorrichtung während des Abziehens.

### WEGE ZUR AUSFÜHRUNG DER ERFINDUNG

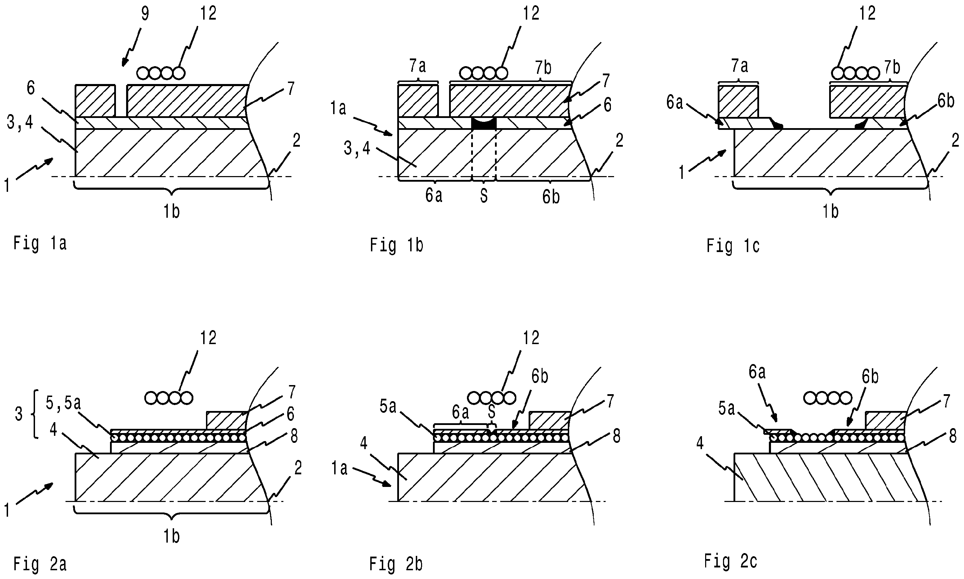

Die Figuren 1a bis 1c zeigen am Beispiel eines ersten Ausführungsbeispiels eines Kabels 1 in zeitlicher Abfolge die Schritte des erfindungsgemäßen Verfahrens. Im ersten Ausführungsbeispiel umfasst das Kabels 1 eine als Innenleiter 4 ausgebildete Leiterstruktur 3 sowie einen äußeren Kabelmantel 7, wobei zwischen Innenleiter 4 und Kabelmantel 7 eine Kabelfolie 6, welche aus einem Kunststoff besteht, angeordnet ist. Die Kabelfolie 6 ist entsprechend auf der als Innenleiter 4 ausgebildeten Leiterstruktur 3 aufgebracht. Das Kabel 1 weist weiters eine Kabelachse 2 auf, welche eine Symmetrieachse für den Kabelaufbau darstellt.

Dargestellt ist dabei ein Endabschnitt 1b des Kabels 1, in welchem ein zu entfernender Abschnitt 6a der Kabelfolie 6 vom Innenleiter 4 entfernt werden soll, um einen Abschnitt des Innenleiters 4 freizulegen. Der Endabschnitt 1b des Kabels 1 ist abschnittsweise innerhalb einer Induktionsspule 12 angeordnet, um die nachfolgend beschriebene induktive Wärmebehandlung durchführen zu können.

Im vorliegenden Ausführungsbeispiel weist der Kabelmantel 7, wie in Figur 1a dargestellt, im Endabschnitt 1b bereits zu Beginn des Verfahrens einen Einschnitt 9 auf, welcher den Kabelmantel 7 in einen zu entfernenden Abschnitt 7a (siehe Fig. 1b) und einen verbleibenden Abschnitt 7b unterteilt.

Figur 1b zeigt den Endabschnitt 1b während bzw. unmittelbar nach der induktiven Wärmebehandlung mittels der Induktionsspuke 12. Mittels der Induktionsspule 12 wird der Innenleiter 4, also jene Leiterstruktur 3, auf welcher die Kabelfolie 6 aufgebracht ist, induktiv erhitzt. Durch die Erhitzung des Innenleiters 4 in einem definierten Bereich wird die Kabelfolie 6 in einem entsprechend definierten Schädigungsbereich S thermisch geschädigt.

Bei der thermischen Schädigung kann es sich beispielsweise um ein lokales Anschmelzen, Aufschmelzen oder Abschmelzen des Kunststoffes der Kabelfolie 6 im Schädigungsbereich S handeln, insbesondere wenn es sich um einen thermoplastischen Kunststoff handelt. Ebenfalls ist es denkbar, dass der Kunststoff der Kabelfolie 6 im Schädigungsbereich S durch die thermische Schädigung abgebrannt, degradiert oder versprödet wird, insbesondere wenn es sich um einen nicht thermoplastischen Kunststoff handelt.

Durch die thermische Schädigung der Kabelfolie 6 im Schädigungsbereich S wird ein Bereich definiert, in welchem sich bei einer Bewegung der Kabelfolie 6 relativ zum Innenleiter 4 ein Riss ausbildet, welcher die Kabelfolie 6 in einen zu entfernenden Abschnitt 6a und in einen verbleibenden Abschnitt 6b teil. Durch den mittels des Schädigungsbereichs S definierten Riss kann der zu entfernende Abschnitt 6a der Kabelfolie 6 von der darunter liegenden Leiterstruktur 3, nämlich dem Innenleiter 4, entfernt werden, möglichst ohne dass Reste der Kabelfolie 6 im freizulegenden Bereich des Innenleiters 4 zurückbleiben.

Der Endabschnitt 1b wird von einem Kabelende 1a, sprich einer Stirnfläche des Kabels 1, an einem Ende begrenzt. Das dem Kabelende gegenüberliegende Ende des Endabschnitts 1b kann mit dem Einschnitt 9 und/oder dem Schädigungsbereich S zusammenfallen oder kann noch einen Abschnitt des Kabels 1 umfassen, in welchem der verbleibende Abschnitt 7a des Kabelmantels 7 angeordnet ist.

Im vorliegenden Ausführungsbeispiel ist der Einschnitt 9 im Kabelmantel 7 näher am Kabelende 1a angeordnet als der Schädigungsbereich S, sodass der Kabelmantel 7 in jenem Abschnitt des Kabels 1, welcher sich während der induktiven Wärmebehandlung innerhalb der Induktionsspule 12 befindet, intakt ist. Da die Wärmebehandlung induktiv erfolgt, kann der Schädigungsbereich S hergestellt werden, ohne dass zuvor der Kabelmantel 7 im zu bearbeitenden Bereich entfernt werden muss. Durch den Versatz von Einschnitt 9 und Schädigungsbereich S kann weiters erreicht werden, dass etwaige beim Entfernen am Innenleiter zurückbleibende Reste der Kabelfolie 6 durch den Kabelmantel 7 verdeckt sind, sodass der abisolierte Bereich des Innenleiters 4 jedenfalls frei von die Kontaktierung behindernden Kunststoffresten ist.

In Figur 1c ist das Kabel 1 während einer Abziehbewegung der Kabelfolie 6 dargestellt, wobei sich im Schädigungsbereich S bereits ein Riss ausgebildet hat, welcher sich durch das Abziehen, sprich durch die Bewegung der Kabelfolie 6 in Richtung des Kabelendes 1a, ausgedehnt bzw. vergrößert hat. Im vorliegenden Ausführungsbeispiel wird ausgenützt, dass die Kabelfolie 6 in der Regel am Kabelmantel 7 anhaftet bzw. die Haftung zwischen Kabelmantel 7 und Kabelfolie 6 größer ist als zwischen Kabelfolie 6 und der darunter liegenden Leiterstruktur 3, hier am Innenleiter 4. Entsprechend werden der zu entfernende Abschnitt 7a des Kabelmantels 7 und der zu entfernende Abschnitt 6a der Kabelfolie 6 gemeinsam durch eine gemeinsame Relativbewegung entfernt. Dies ermöglicht auch ein einfacheres Greifen der Kabelfolie 6, da durch ein entsprechendes Abziehwerkzeug der Kabelmantel 7 gegriffen und bewegt werden kann.

Es soll dabei nicht unerwähnt bleiben, dass es sich bei der Relativbewegung, die zur Ausbildung des Risses führt, nicht (ausschließlich) zwangsläufig um eine translatorische Bewegung handeln muss, sondern auch eine Drehbewegung oder ein Knicken denkbar sind. Die Entfernung der zu entfernenden Abschnitte 6a,7a von Kabelfolie 6 und Kabelmantel 7 nach der Rissbildung erfolgt vorzugsweise durch eine translatorische Abziehbewegung in Richtung des Kabelendes 1a.

Nach der Entfernung der zu entfernenden Abschnitte 6a,7a von Kabelfolie 6 und Kabelmantel 7 verbleibt ein Kabel 1, in dessen Endbereich 1b der Innenleiter 4 zur Kontaktierung freigelegt ist.

In den Figuren 2a bis 2c werden die bereits im Zusammenhang mit dem ersten Ausführungsbeispiel diskutierten Schritte des erfindungsgemäßen Verfahrens gezeigt, weshalb lediglich auf die Unterschiede des zweiten Ausführungsbeispiels im Vergleich zum ersten Ausführungsbeispiel im Detail eingegangen wird.

Während das Kabel 1 im ersten Ausführungsbeispiel lediglich eine einzige Leiterstruktur 3, nämlich den Innenleiter 4, umfasst, weist das Kabel 1 im zweiten Ausführungsbeispiel einen Innenleiter 4 und eine äußere Leiterstruktur 5, nämlich ein als Schirmgeflecht ausgebildetes Metallgeflecht 5a, auf. Die Kabelfolie 6 ist dabei nicht direkt auf dem Innenleiter 4 aufgebracht, sondern auf der äußeren Leiterstruktur 5, sprich dem Metallgeflecht 5a. Um eine Kontaktierung von Metallgeflecht 5a und Innenleiter 4 zu verhindern, ist zwischen Innenleiter 4 und Metallgeflecht 5a eine innere Isolationsschicht 8 angeordnet.

Weiters ist insbesondere in Fig. 2b zu erkennen, dass im vorliegenden nicht beanspruchten Ausführungsbeispiel der zu entfernende Abschnitt 7a des Kabelmantels 7a bereits vor dem Einführen des Endabschnitts 1b in die Induktionsspule 12 entfernt wurde. Wenngleich dies - wie zuvor erwähnt nicht unbedingt erforderlich ist - funktioniert die induktive Erhitzung der äußeren Leiterstruktur 5 natürlich auch, wenn kein Abschnitt des Kabelmantels 7 in der Induktionsspule 12 zwischen der zu erhitzenden Leiterstruktur 3,5,5a und der Induktionsspule 12 vorhanden ist. Mittels der Induktionsspule 12 kann im vorliegenden Ausführungsbeispiel durch entsprechende Wahl der Induktionsparameter, wie Amplitude und Frequenz des Induktionsstromes, die Eindringtiefe so gewählt werden, dass insbesondere das Metallgeflecht 5a im Schädigungsbereich S erhitzt wird, sodass die auf dem Metallgeflecht 5a befindliche Kabelfolie 6 im Schädigungsbereich S thermisch geschädigt wird. Dabei ist es insbesondere vorteilhaft, wenn die Isolationsschicht 8 einen höheren thermischen Widerstand aufweist als die Kabelfolie 6, um zu verhindern, dass auch die Isolationsschicht 8 im Schädigungsbereich S signifikant thermisch geschädigt wird.

In Figur 2c ist dargestellt, dass der zu entfernende Abschnitt 6a der Kabelfolie 6 durch Relativbewegen von Kabelfolie 6 zu Metallgeflecht 5a vom Endabschnitt 1b entfernt wird.

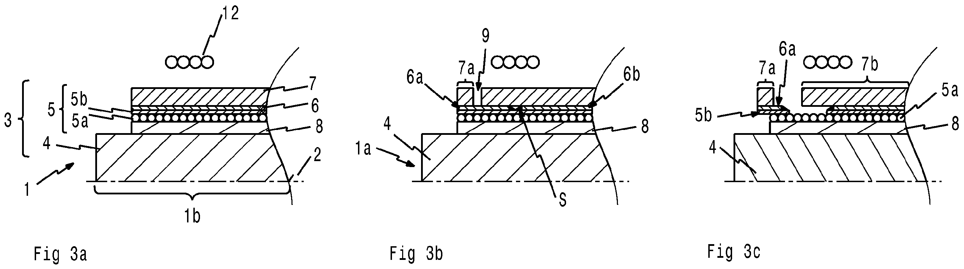

Die Figuren 3a bis 3c zeigen die zuvor beschriebenen Schritte des erfindungsgemäßen Verfahrens im Zusammenhang mit einer besonders bevorzugten dritten Ausführungsvariante. Wiederum wird in der Folge lediglich auf die Unterschiede zu den zuvor beschriebenen Ausführungsvarianten eingegangen.

In diesem Ausführungsbeispiel weist das Kabel 1 drei Leiterstrukturen 3, nämlich einen Innenleiter 4 und zwei, äußere Leiterstrukturen 5, auf. Bei der ersten äußeren Leiterstruktur 5a handelt es sich - wie auch beim zweiten Ausführungsbeispiel - um ein als Schirmgeflecht ausgebildetes Metallgeflecht 5a, welches auf einer Isolationsschicht 8 aufgebracht ist. Auf dem Metallgeflecht 5a befindet sich eine zweite äußere Leiterstruktur in Form einer Metallfolie 5b. Die Kabelfolie 6 ist im vorliegenden Ausführungsbeispiel auf der Metallfolie 5b aufgebracht, wobei auch denkbar ist, dass Metallfolie 5b und Kabelfolie 6 als Verbundfolie ausgebildet sind. Es handelt sich bei diesem Kabelaufbau um einen typischen Kabelaufbau eines Koaxialkabels, bei welchem das Metallgeflecht 5a als Schirmgeflecht fungiert.

In Figur 3a ist zu erkennen, dass der Kabelmantel 7 beim Einführen des Endabschnitts 1b in die Induktionsspule 12 vollkommen intakt ist, also auch kein Einschnitt 9 vorgesehen ist.

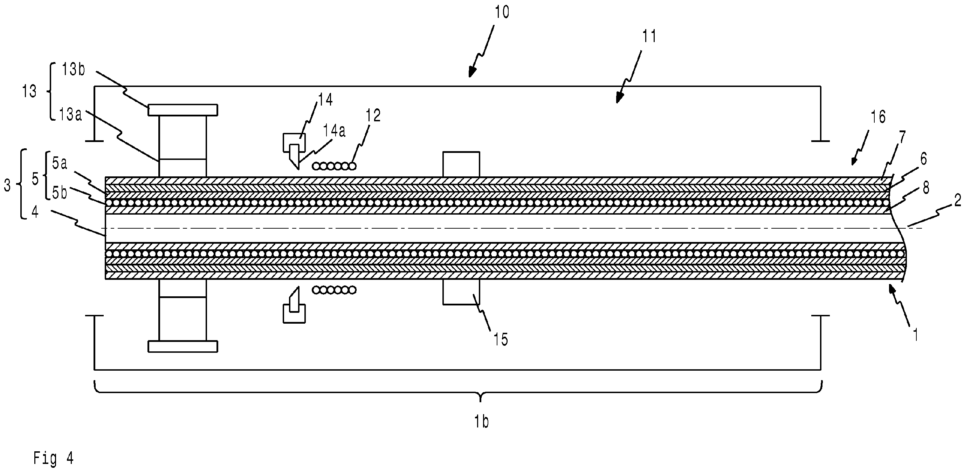

Figur 3b zeigt, dass der Einschnitt 9 vor, nach oder während der induktiven Erhitzung der Metallfolie 5b mittels der Induktionsspule 12 hergestellt werden kann, jedoch in der selben Bearbeitungsvorrichtung 10 (siehe Figuren 4 bis 6). Mittels der Induktionsspule 12 im vorliegenden Ausführungsbeispiel kann durch entsprechende Wahl der Induktionsparameter, wie Amplitude und Frequenz des Induktionsstromes, die Eindringtiefe so gewählt werden, dass insbesondere die Metallfolie 5b im Schädigungsbereich S erhitzt wird, sodass die auf der Metallfolie 5b befindliche Kabelfolie 6 im Schädigungsbereich S thermisch geschädigt wird.

Nachfolgend wird, wie in Figur 3c zu erkennen ist, das Metallgeflecht 5a durch Entfernen von den zu entfernenden Abschnitten 6a,7a von Kabelfolie 6 und Kabelmantel 7 freigelegt. Dabei bildet sich beim Relativbewegen von Kabelmantel 7 und Kabelfolie 6 relativ zum Innenleiter 4 bzw. zum Metallgeflecht 5a auch in der Metallfolie 5b im Schädigungsbereich S ein Riss aus, sodass auch die Metallfolie 5b gemeinsam mit Kabelmantel 7 und Kabelfolie 6 vom freizulegenden Abschnitt des Endabschnitts 1b des Kabels 1 abgezogen werden kann. Die gemeinsame Entfernung lässt sich besonders einfach bei einer Verbundfolie erreichen, jedoch ist es auch denkbar, dass durch die thermische Schädigung der Kabelfolie 6 der Zugwiderstand der Metallfolie 5b derart verringert wird, dass sich bei der Relativbewegung aufgrund der hohen Haftung zwischen Kabelfolie 6 und Metallfolie 5b ein Riss in der Metallfolie 5b ausbildet.

Es versteht sich von selbst, dass die zuvor beschriebenen Ausführungsbeispiele, insbesondere im Hinblick auf die Kabelaufbauten und die Positionen der Einschnitte 9, ohne Weiteres miteinander kombiniert werden können. Auch können zusätzliche Schichten, sowohl Isolationsschichten 8 als auch Leiterstrukturen, vorgesehen sein, wobei die zuvor beschriebene Freilegung von Innenleiter 4 und/oder Metallgeflechten 5a stufenartig mit den zuvor beschriebenen Schritten wiederholt werden kann.

### FUNKTIONSWEISE DER ERFINDUNG

An Hand der in den Figuren 4 bis 7 dargestellten Bearbeitungsvorrichtung 10 soll die Funktionsweise des erfindungsgemäßen Verfahrens verdeutlicht werden. Die Bearbeitungsvorrichtung 10 begrenzt dabei einen Bearbeitungsraum 11, in welchem Bearbeitungsraum 11 ein Endabschnitt 1b eines zu bearbeitenden Kabels 1 aufgenommen ist, und weist zumindest eine Durchtrittsöffnung 16 zum Einführen des Endabschnitts 1b auf. Der Aufbau des Kabels 1 entspricht dabei dem im Zusammenhang mit den Figuren 3a bis 3c beschriebenen Aufbau, sodass das Kabel 1 in der nachfolgend angegebenen Reihenfolge einen Innenleiter 4, eine Isolationsschicht 8, ein als Schirmgeflecht ausgebildetes Metallgeflecht 5a sowie eine Metallfolie 5b, eine auf der Metallfolie 5b aufgebrachte Kunststofffolie 6 sowie einen Kabelmantel 7 umfasst.

Die Induktionsspule 12 ist im Bearbeitungsraum 11 angeordnet, wobei der Endabschnitt 1b durch die Induktionsspule 12 geführt ist, sodass zumindest jener Bereich des Kabels 1, in welchem der Schädigungsbereich S erzeugt werden soll, innerhalb der Induktionsspule 12 angeordnet ist. Weiters ist zur Fixierung des Endabschnitts 1b des Kabels 1 zumindest eine Klemmeinheit 15 im Bearbeitungsraum 11 vorgesehen mittels welcher der Endabschnitt 1b während der Bearbeitung geklemmt werden kann. Die Klemmeinheit 15 umfasst vorzugsweise ein oder mehrere Klemmelemente aus Kunststoff, sodass diese im Nahbereich der Induktionsspule 12 positioniert werden können.

Weiters umfasst die Bearbeitungsvorrichtung 10 eine Schneideinheit 14 mit zumindest einem Schneidelement 14a zur Herstellung eines Einschnitts 9 im Kabelmantel 7 sowie Mittel 13 zum Abziehen des zu entfernenden Abschnitts 6a der Kabelfolie 6 auf. Die Mittel 13 zum Abziehen umfassen dabei im vorliegenden Ausführungsbeispiel ein Greifelement 13a, welches ausgebildet ist, um den Kabelmantel 7 oder die Kabelfolie 6 zu greifen, sowie eine Bewegungseinrichtung 13b, mittels welcher die Greifelemente 13a, sobald sie den Kabelmantel 7 oder die Kabelfolie 6 umgriffen haben, relativ zum Kabel 1 bewegt, vorzugsweise verschoben oder verdreht werden können.

Aus Figur 4 ist der erste Schritt des Verfahrens ersichtlich, nämlich das Bereitstellen eines Endabschnitts 1b eines Kabels 1, welches zumindest eine Leiterstruktur 3 aufweist und bei welchem eine Kabelfolie 6 aus Kunststoff auf einer der Leiterstrukturen 3 aufgebracht ist. Im gezeigten Zustand der Bearbeitungsvorrichtung 10 befindet sich die Klemmeinheit 15 bereits in einem den verbleibenden Abschnitt 7b des Kabelmantels 7 klemmenden Zustand und die Greifelemente 13a sind im Eingriff mit dem zu entfernenden Abschnitt 7a des Kabelmantels 7. Die Induktionsspule 12 ist bezogen auf die Kabelachse 2 zwischen dem Mittel 13 zum Abziehen der Kabelfolie 6 und der Klemmeinheit 15 angeordnet, um den zu bearbeitenden Abschnitt des Kabels 1 zu fixieren.

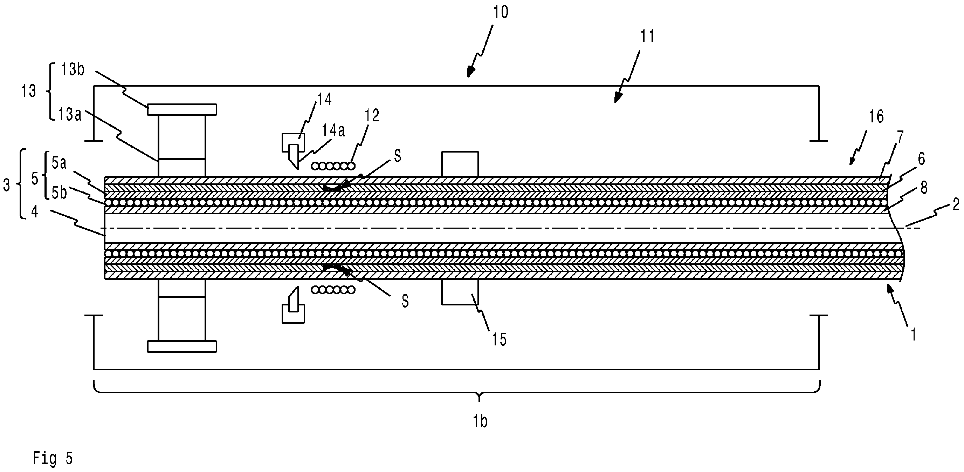

Figur 5 zeigt nun den Schritt des Erzeugens des definierten Schädigungsbereichs S, indem jene Leiterstruktur 3, im vorliegenden die Metallfolie 5b, welche mit der Kabelfolie 6 in Kontakt steht, mittels der Induktionsspule 12 induktiv erhitzt wird, sodass die Kabelfolie 6 im Schädigungsbereich S thermisch geschädigt wird. Um eine solche definierte Schädigung zu erreichen, werden die Geometrie der, vorzugsweise wassergekühlten, Induktionsspule 12 sowie die Induktionsparameter, wie Amplitude und Frequenz sowie Heizdauer, so gewählt, dass in der Induktionsspule 12 ein elektromagnetisches Wechselfeld erzeugt wird, wobei mittels der durch das Wechselfeld darstellbaren Eindringtiefe eine maximale Erhitzung der Metallfolie 5b erreicht wird. Da die Metallfolie 5b aufgrund der Materialeigenschaften einer wesentlich höheren thermische Belastung standhält als die darauf aufgebrachte Kabelfolie 6 aus Kunststoff, wird die Kabelfolie 6 im Schädigungsbereich S durch die induktive Erhitzung der Metallfolie 5b thermisch geschädigt, beispielsweise geschmolzen oder versprödet bzw. degradiert. Um eine solche thermische Schädigung zu erreichen, wird die Kabelfolie 6 mittels der induktiv erhitzten Metallfolie 5b im Schädigungsbereich S auf eine zwischen 120°C und 200°C liegende Temperatur gebracht. Die Dauer der induktiven Erhitzung beträgt vorteilhafter Weise weniger als 20s, bevorzugt weniger als 10s.

Es ist in alternativen Ausführungsbeispielen auch denkbar, dass die Metallfolie 5b ausgelegt ist, um durch die induktive Erhitzung strukturell geschwächt zu werden, sodass eine definierte Rissbildung der Metallfolie 5b im Schädigungsbereich S erreicht wird.

Durch die induktive Erhitzung kann der Kabelmantel 7 während der Erhitzung vollständig intakt sein, da das elektromagnetische Wechselfeld den Kabelmantel 7 durchdringen kann, ohne dass dies zu einer Erhitzung führen würde oder durch den Kabelmantel 7 behindert werden würde. Auch können mittels einer Induktionsspule 12 Endabschnitte 1b von Kabeln 1 mit unterschiedlichen Durchmessern und Kabelaufbau bearbeitet werden, da lediglich die Parameter des elektromagnetischen Wechselfeldes entsprechend eingestellt werden müssen.

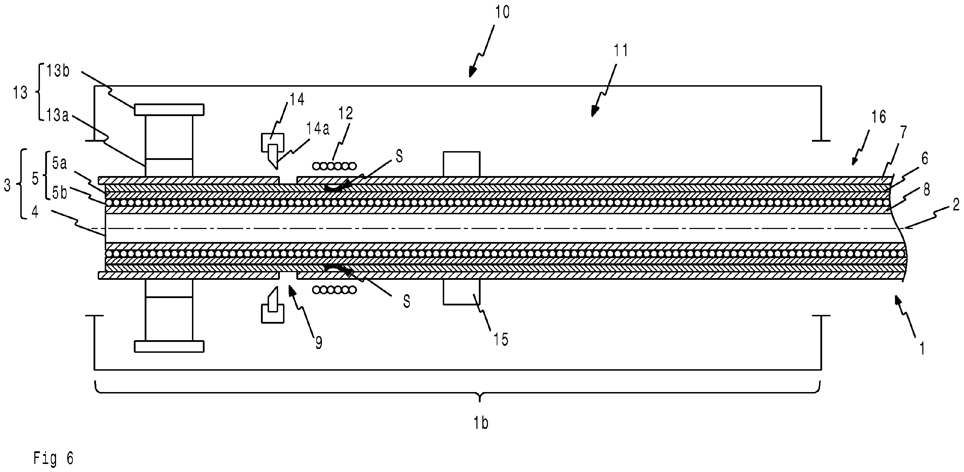

In Figur 6 ist der Endabschnitt 1b nach dem Erzeugen eines Einschnitts 9 im Kabelmantel 7 mittels der Schneideeinheit 14 dargestellt. Dabei dringen die Schneideelemente 14a in radialer Richtung in den Kabelmantel 7 ein, wobei die Schneideelemente 14a ausgebildet sind, um einen zumindest teilweise, vorzugsweise vollständig, umlaufenden Einschnitt 9 herzustellen. Wenn die Schneideeinheit 14, wie dargestellt, verschiebbar in der Bearbeitungsvorrichtung 10 gehalten ist, kann der zu entfernende Abschnitt 7a des Kabelmantels 7 mittels der Schneideinheit 14 in Richtung des Kabelendes 1a verschoben werden, um den Einschnitt 9 in axialer Richtung zu vergrößern.

Die Schneideinheit 14 ist dabei zwischen den Mitteln 13 zum Abziehen der Kabelfolie 6, insbesondere zwischen den Greifelementen 13a, und der Induktionsspule 12 angeordnet, sodass der Abschnitt zwischen Einschnitt 9 und Kabelende 1a geringer ist als der Abstand zwischen Kabelende 1a und Induktionsspule 12. Von der Durchtrittsöffnung 16 aus gesehen ist die Induktionsspule 12 zwischen Durchtrittsöffnung 16 und Schneideinheit 14 positioniert. Eine entsprechende Positionierung der Schneideinheit 14 stellt sicher, dass etwaige beim nachfolgenden Relativbewegen und Abziehen verbleibende Reste der Kabelfolie 6 im Schädigungsbereich S durch den verbleibenden Abschnitt 7b des Kabelmantels 7 verdeckt werden und so eine Kontaktierung des Metallgeflechts 5a nicht negativ beeinflussen.

Die beschriebene Positionierung der Schneideinheit 14 stellt in alternativen Ausführungsvarianten des Verfahrens, in denen der Einschnitt 9 vor der induktiven Erhitzung erfolgt, sicher, dass der Kabelmantel 7 in jenem Bereich des Kabels 1, in welchem der Schädigungsbereich S mittels der Induktionsspule 12 erzeugt wird, intakt ist.

Wie bereits im Zusammenhang mit den in den Figuren 1a bis 3c gezeigten Ausführungsbeispielen erwähnt, ist die Schneideinheit 14 nicht unbedingt ein erforderlicher Teil der Bearbeitungsvorrichtung 10, da der Einschnitt 9 auch bereits vor dem Einführen des Endabschnitts 1b in den Bearbeitungsraum 11 hergestellt werden kann oder der Kabelmantel 7 im zu bearbeitenden Abschnitt bereits vor dem Einführen entfernt sein kann.

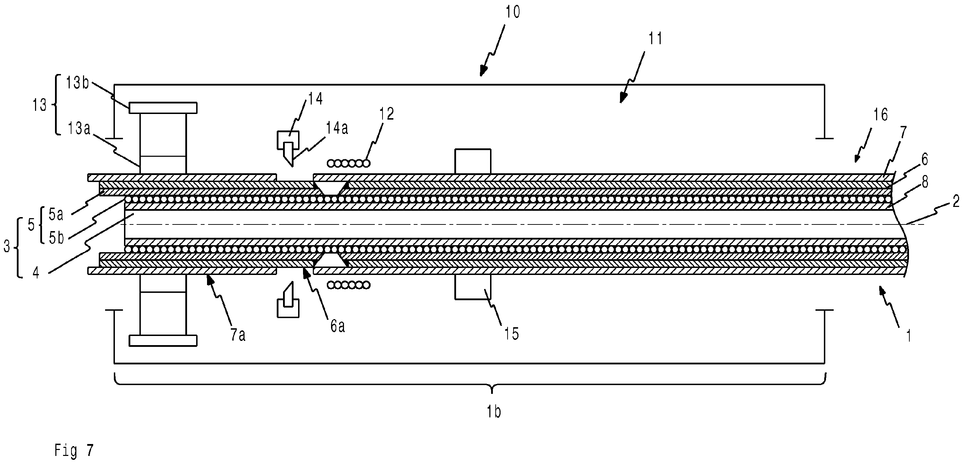

In Figur 7 ist der Schritt des Bewegens der Kabelfolie 6 relativ zu den am Kabel 1 verbleibenden Leiterstrukturen 3, nämlich relativ zum Innenleiter 4 und zum Metallgeflecht 5a, dargestellt. Durch die Relativbewegung, bei der es sich um eine translatorische Bewegung, eine Verdrehbewegung oder eine Knickbewegung handeln kann, bildet sich im Schädigungsbereich S ein Riss in der Kabelfolie 6 aus, welcher den zu entfernenden Abschnitt 6a und den verbleibenden Abschnitt 6b der Kabelfolie 6 voneinander trennt. Weiters bildet sich im Schädigungsbereich S auch ein Riss in der Metallfolie 5b aus, sodass nachfolgend auch die Metallfolie 5b gemeinsam mit den zu entfernenden Abschnitten 6a,7a von Kabelfolie 6 und Kabelmantel 7 entfernt werden kann, um das Metallgeflecht 5a zur Kontaktierung freizulegen.

Im vorliegenden Ausführungsbeispiel wird durch die Bewegung der Greifelemente 13a, welche den zu entfernenden Abschnitt 7a des Kabelmantels 7 klemmen, auch der zu entfernende Abschnitt 6a der am Kabelmantel 7 anhaftenden Kabelfolie 6 sowie die an der Kabelfolie 6 anhaftenden Metallfolie 5b, insbesondere wenn Kabelfolie 6 und Metallfolie 5b als Verbundfolie ausgebildet sind, relativ zum Metallgeflecht 5a bewegt, um den Riss auszubilden. Der Riss wird sich in der Regel von der thermischen Schädigung der Kabelfolie 6 ausgehend ausbilden.

Sobald der Riss im Schädigungsbereich S in Metallfolie 5b und Kabelfolie 6 ausgebildet ist, können die entfernenden Abschnitte 6a,7a von Kabelfolie 6 und Kabelmantel 7 sowie von der Metallfolie 5b in einfacher Art und Weise, vorzugsweise durch die Mittel 13 zum Abziehen, vollständig vom Kabel 1 abgezogen werden, um das als Schirmgeflecht ausgebildete Metallgeflecht 5a freizulegen.

Es soll nicht unerwähnt bleiben, dass mittels der zuvor beschriebenen Bearbeitungsvorrichtung 10 sowohl Kabel mit Kabelaufbauten, die in den zuvor detailliert beschriebenen Ausführungsbeispielen gezeigt werden, als auch Kabel mit Kabelaufbauten, die eine oder mehrere Zwischenschichten aufweisen, entsprechend bearbeitet werden können.

Auch wenn in den Figuren 4 bis 7 alle relevanten Elemente der Bearbeitungsvorrichtung 10 der besseren Nachvollziehbarkeit halber in einem gemeinsamen Bearbeitungsraum 11 angeordnet dargestellt sind, was zusätzlich eine besonders kurze Gesamtdauer für die Entfernung des zu entfernenden Abschnitts 6a der Kabelfolie 6 bewirkt, kann in alternativen Ausführungsvarianten der Erfindung, insbesondere wenn die Bearbeitungsvorrichtung 10 als Anlage mit mehreren Teileinrichtungen ausgebildet ist, vorgesehen sein, dass Schneideinheit 14 und/oder die Mittel 13 zum Abziehen der Kabelfolie 6 in jeweils getrennten weiteren Bearbeitungsräumen angeordnet sind. So kann die Schneideinheit 14 in einem weiteren Bearbeitungsraum einer Schneideinrichtung der Bearbeitungsvorrichtung 10 angeordnet sein und/oder die Mittel 13 zum Abziehen der Kabelfolie 6 in einem weiteren Bearbeitungsraum einer Abmantelungseinrichtung der Bearbeitungsvorrichtung 10 angeordnet sein, während die Induktionsspule 12 sowie vorzugsweise die Klemmeinheit 15 im Bearbeitungsraum 11 angeordnet ist.

### BEZUGSZEICHENLISTE

- 1: Kabel
1a Kabelende
1b Endabschnitt
- 2: Kabelachse
- 3: Leiterstruktur
- 4: Innenleiter
- 5: äußere Leiterstruktur
5a Metallgeflecht
5b Metallfolie
- 6: Kabelfolie
- 6a: zu entfernender Abschnitt der Kabelfolie 6
- 6b: verbleibender Abschnitt der Kabelfolie 6
- 7: Kabelmantel
7a zu entfernender Abschnitt des Kabelmantels 7
7b verbleibender Abschnitt des Kabelmantels 7
- 8: Isolationsschicht
- 9: Einschnitt
- 10: Bearbeitungsvorrichtung
- 11: Bearbeitungsraum
- 12: Induktionsspule
- 13: Mittel zum Abziehen der Kabelfolie 13
13a Greifelement
13b Bewegungseinrichtung
14 Schneideinheit
14a Schneidelement
15 Klemmeinheit
16 Durchtrittöffnung
S Schädigungsbereich

## Patentansprüche

1. Verfahren zum Entfernen eines zu entfernenden Abschnitts (6a) einer Kabelfolie (6) von einem Endabschnitt (1b) eines Kabels (1),
umfassend die folgenden Schritte:
- Bereitstellen eines Endabschnitts (1b) eines eine Kabelachse (2) aufweisenden Kabels (1), wobei das Kabel (1) einen Kabelmantel (7) sowie zumindest eine elektrisch leitfähige Leiterstruktur (3,4,5) und die auf einer der Leiterstrukturen (3,4,5) aufgebrachte Kabelfolie (6) aus einem Kunststoff umfasst;
- Erzeugen eines definierten Schädigungsbereichs (S) im bereitgestellten Endabschnitt (1b) des Kabels (1), indem zumindest jene Leiterstruktur (3,4,5a,5b), auf welcher die Kabelfolie (6) aufgebracht ist, induktiv erhitzt wird, sodass die auf der erhitzten Leiterstruktur (3,4,5a,5b) aufgebrachte Kabelfolie (6) im Schädigungsbereich (S) zumindest teilweise thermisch geschädigt wird,
wobei die Kabelfolie (6) im Schädigungsbereich (S) während der induktiven Erhitzung der zumindest einen Leiterstruktur (3,4,5) vom Kabelmantel (7) abgedeckt wird;
- zumindest teilweises umlaufendes Einschneiden des Kabelmantels (7) während oder nach der Erzeugung des Schädigungsbereichs (S),
wobei das zumindest teilweise Einschneiden an einer Position erfolgt, welche näher an einem Kabelende (1a) des Endabschnitts (1b) angeordnet ist als der Schädigungsbereich (S);
- Bewegen der Kabelfolie (6) relativ zu einer der Leiterstrukturen (3,4,5), wobei sich durch die Relativbewegung im Schädigungsbereich (S) ein Riss ausbildet, welcher den zu entfernenden Abschnitt (6a) der Kabelfolie (6) von einem am Kabel (1) verbleibenden Abschnitt (6b) der Kabelfolie (6) trennt.

2. Verfahren zum Entfernen eines zu entfernenden Abschnitts (6a) einer Kabelfolie (6) von einem Endabschnitt (1b) eines Kabels (1),
umfassend die folgenden Schritte:
- Bereitstellen eines Endabschnitts (1b) eines eine Kabelachse (2) aufweisenden Kabels (1), wobei das Kabel (1) einen Kabelmantel (7) sowie zumindest eine elektrisch leitfähige Leiterstruktur (3,4,5) und die auf einer der Leiterstrukturen (3,4,5) aufgebrachte Kabelfolie (6) aus einem Kunststoff umfasst;
- Herstellen eines Einschnitts (9) im bereitgestellten Endabschnitt (1b) des Kabels (1) durch zumindest teilweise umlaufendes Einschneiden des Kabelmantels (7);
- Erzeugen eines definierten Schädigungsbereichs (S) im Endabschnitt (1b) des Kabels (1), indem zumindest jene Leiterstruktur (3,4,5a,5b), auf welcher die Kabelfolie (6) aufgebracht ist, induktiv erhitzt wird, sodass die auf der erhitzten Leiterstruktur (3,4,5a,5b) aufgebrachte Kabelfolie (6) im Schädigungsbereich (S) zumindest teilweise thermisch geschädigt wird,
wobei der Schädigungsbereich (S) nach der Herstellung des Einschnitts (9) erzeugt wird,
wobei ein Abstand zwischen einem Kabelende (1a) des Endabschnitts (1b) und dem Schädigungsbereich (S) größer ist als zwischen dem Kabelende (1a) und einer Position des Einschnitts (9),
wobei die Kabelfolie (6) im Schädigungsbereich (S) während der induktiven Erhitzung der zumindest einen Leiterstruktur (3,4,5) vom Kabelmantel (7) abgedeckt wird;
- Bewegen der Kabelfolie (6) relativ zu einer der Leiterstrukturen (3,4,5), wobei sich durch die Relativbewegung im Schädigungsbereich (S) ein Riss ausbildet, welcher den zu entfernenden Abschnitt (6a) der Kabelfolie (6) von einem am Kabel (1) verbleibenden Abschnitt (6b) der Kabelfolie (6) trennt.

3. Verfahren nach Anspruch 1 oder 2, wobei sich die zumindest eine Leiterstruktur (3) aus einem Innenleiter (4) und zumindest einer äußeren Leiterstruktur (5,5a,5b) zusammensetzt, wobei die Kabelfolie (6) auf einer der äußeren Leiterstrukturen (5,5a,5b) aufgebracht ist.

4. Verfahren nach Anspruch 3, wobei jene äußere Leiterstruktur (5), auf welche die Kabelfolie (6) aufgebracht ist, als Metallfolie (5b) ausgebildet ist.

5. Verfahren nach Anspruch 4, wobei die als Metallfolie (5b) ausgebildete äußere Leiterstruktur (5) durch die induktive Erhitzung im Schädigungsbereich (S) strukturell geschwächt wird.

6. Verfahren nach einem der Ansprüche 1 bis 5, wobei die induktive Erhitzung mittels einer Induktionsspule (12) erfolgt, mittels welcher Induktionsspule (12) ein elektromagnetisches Wechselfeld erzeugt wird, wobei zumindest der Schädigungsbereich (S) des Kabels (1) während der induktiven Erhitzung innerhalb der Induktionsspule (12) angeordnet wird.

7. Verfahren nach einem der Ansprüche 1 bis 6, wobei der Kabelmantel (7) durch einen mittels des Schritts des zumindest teilweise umlaufenden Einschneidens hergestellten Einschnitt (9) in einen zu entfernenden Abschnitt (7a) des Kabelmantels (7) und einen verbleibenden Abschnitt (7b) des Kabelmantels (7) unterteilt ist und dass der zu entfernende Abschnitt (7a) des Kabelmantels (7) in Richtung der Kabelachse (2) bewegt wird, wobei durch die Bewegung der zumindest teilweise am Kabelmantel (7) anhaftende zu entfernende Abschnitt (6a) der Kabelfolie (6) abgezogen wird.

8. Verfahren nach einem der Ansprüche 1 bis 7, wobei die Schritte
- induktives Erhitzen zumindest jener Leiterstruktur (3,4,5a,5b) auf welcher die Kabelfolie (6) aufgebracht ist;
- zumindest teilweise umlaufendes Einschneiden des Kabelmantels (7);
- gemeinsames Entfernen eines zu entfernenden Abschnitts (7a) des Kabelmantels (7) und des zu entfernenden Abschnitts (6a) der Kabelfolie (6) in einem Bearbeitungsraum (11) einer Bearbeitungsvorrichtung (10) durchgeführt werden.

9. Verfahren nach einem der Ansprüche 1 bis 8, wobei die zumindest eine Leiterstruktur (3,4,5), auf welche die Kabelfolie (6) aufgebracht ist, auf eine Temperatur größer gleich 80°C, bevorzugt größer gleich 100°C, besonders bevorzugt größer gleich 200°C, insbesondere größer gleich 300°C, induktiv erhitzt wird.

10. Bearbeitungsvorrichtung (10) zur Durchführung eines Verfahrens nach einem der Ansprüche 1 bis 9 umfassend:
- einen Bearbeitungsraum (11) zur Aufnahme eines Endabschnitts (1b) eines zu bearbeitenden Kabels (1), wobei das Kabel (1) einen Kabelmantel (7) sowie zumindest eine elektrisch leitfähige Leiterstruktur (3,4,5) und eine auf einer der Leiterstrukturen (3,4,5) aufgebrachte Kabelfolie (6) aus einem Kunststoff umfasst,
wobei der Bearbeitungsraum (11) eine Durchtrittsöffnung (16) für das Kabel (1) aufweist;
- eine im Bearbeitungsraum (11) angeordnete Induktionsspule (12);
- Mittel (13) zum Abziehen eines durch einen Schädigungsbereich (S) definierten zu entfernenden Abschnitts (6a) der Kabelfolie (6);
- eine Schneideinheit (14) zum zumindest teilweise umlaufenden Einschneiden des Kabelmantels (7),
**dadurch gekennzeichnet, dass**
die Induktionsspule (12) eingerichtet ist, ein elektromagnetisches Wechselfeld zu erzeugen, um zumindest jene Leiterstruktur (3,4,5a,5b) eines während eines Bearbeitungsvorganges in der Induktionsspule (12) befindlichen Abschnitts des Kabels (1), auf welcher Leiterstruktur (3,4,5a,5b) die Kabelfolie (6) aufgebracht ist, induktiv zu erhitzen, sodass die auf der erhitzten Leiterstruktur (3,4,5a,5b) aufgebrachte Kabelfolie (6) im Schädigungsbereich (S) zumindest teilweise thermisch geschädigt wird;
**und dass**
die Schneideinheit (14) im Bearbeitungsraum (11) angeordnet ist, wobei die Induktionsspule (12) zwischen Schneideinheit (14) und Durchtrittsöffnung (16) angeordnet ist, und die Schneideinheit (14) dazu eingerichtet ist den Kabelmantel (7) an einer Position einzuschneiden, welche näher an einem Kabelende (1a) des Endabschnitts (1b) angeordnet ist als der Schädigungsbereich (S).

11. Bearbeitungsvorrichtung (10) nach Anspruch 10, **dadurch gekennzeichnet, dass** im Bearbeitungsraum (11) zumindest eine Klemmeinheit (15) zur Fixierung des Endabschnitts (1b) des Kabels (1) während eines Bearbeitungsvorganges angeordnet ist.

12. Bearbeitungsvorrichtung (10) nach einem der Ansprüche 10 bis 11, **dadurch gekennzeichnet, dass** die Mittel (13) zum Abziehen des zu entfernenden Abschnitts (6a) der Kabelfolie (6) ausgebildet sind, um einen durch einen Einschnitt (9) definierten zu entfernenden Abschnitt (7a) des Kabelmantels (7) zu kontaktieren und nachfolgend den zu entfernenden Abschnitt (7a) des Kabelmantels (7) gemeinsam mit einem zu entfernenden Abschnitt (6a) der Kabelfolie (6a) mittels einer Abziehbewegung zu entfernen.

13. Bearbeitungsvorrichtung (10) nach einem der Ansprüche 10 bis 12, **dadurch gekennzeichnet, dass** die Mittel (13) zum Abziehen des zu entfernenden Abschnitts (6a) der Kabelfolie (6) im Bearbeitungsraum (11) angeordnet sind.

## Claims

1. Method for removing a section (6a) of a cable film (6) to be removed from an end section (1b) of a cable (1), comprising the following steps:
- providing an end section (1b) of a cable (1) having a cable axis (2), wherein the cable (1) comprises a cable sheath (7) as well as at least one electrically conductive conductor structure (3, 4, 5) and the cable film (6) made of a plastic material applied to one of the conductor structures (3, 4, 5);
- generating a defined damage region (S) in the provided end section (1b) of the cable (1) by inductively heating at least that conductor structure (3, 4, 5a, 5b) to which the cable film (6) is applied, so that the cable film (6) applied to the heated conductor structure (3, 4, 5a, 5b) is at least partially thermally damaged in the damage region (S),
wherein the cable film (6) is covered by the cable sheath (7) in the damage region (S) during the inductive heating of the at least one conductor structure (3, 4, 5);
- at least partially circumferentially cutting into the cable sheath (7) during or after the generation of the damage region (S),
wherein the at least partial cutting is performed at a position which is located closer to a cable end (1a) of the end section (1b) than the damage region (S);
- moving the cable film (6) relative to one of the conductor structures (3, 4, 5), wherein the relative movement forms a crack in the damage region (S) which separates the section (6a) of the cable film (6) to be removed from a section (6b) of the cable film (6) remaining on the cable (1).

2. Method for removing a section (6a) of a cable film (6) to be removed from an end section (1b) of a cable (1), comprising the following steps:
- providing an end section (1b) of a cable (1) having a cable axis (2), wherein the cable (1) comprises a cable sheath (7) as well as at least one electrically conductive conductor structure (3, 4, 5) and the cable film (6) made of a plastic material applied to one of the conductor structures (3, 4, 5);
- producing an incision (9) in the provided end section (1b) of the cable (1) by at least partially circumferentially cutting into the cable sheath (7);
- generating a defined damage region (S) in the end section (1b) of the cable (1) by inductively heating at least that conductor structure (3, 4, 5a, 5b) to which the cable film (6) is applied, so that the cable film (6) applied to the heated conductor structure (3, 4, 5a, 5b) is at least partially thermally damaged in the damage region (S),
wherein the damage region (S) is generated after the incision (9) has been produced,
wherein a distance between a cable end (1a) of the end section (1b) and the damage region (S) is greater than between the cable end (1a) and a position of the incision (9),
wherein the cable film (6) is covered by the cable sheath (7) in the damage region (S) during the inductive heating of the at least one conductor structure (3, 4, 5);
- moving the cable film (6) relative to one of the conductor structures (3, 4, 5), wherein the relative movement forms a crack in the damage region (S) which separates the section (6a) of the cable film (6) to be removed from a section (6b) of the cable film (6) remaining on the cable (1).

3. Method according to claim 1 or 2, wherein the at least one conductor structure (3) is composed of an inner conductor (4) and at least one outer conductor structure (5, 5a, 5b), wherein the cable film (6) is applied to one of the outer conductor structures (5, 5a, 5b).

4. Method according to claim 3, wherein that outer conductor structure (5) to which the cable film (6) is applied is formed as a metal foil (5b).

5. Method according to claim 4, wherein the outer conductor structure (5) formed as a metal foil (5b) is structurally weakened by the inductive heating in the damage region (S).

6. Method according to one of claims 1 to 5, wherein the inductive heating is carried out by means of an induction coil (12), by means of which induction coil (12) an electromagnetic alternating field is generated, wherein at least the damage region (S) of the cable (1) is arranged within the induction coil (12) during the inductive heating.

7. Method according to one of claims 1 to 6, wherein the cable sheath (7) is divided by an incision (9) produced by means of the step of at least partially circumferentially cutting into a section (7a) of the cable sheath (7) to be removed and a remaining section (7b) of the cable sheath (7), and that the section (7a) of the cable sheath (7) to be removed is moved in the direction of the cable axis (2), wherein as a result of the movement, the section (6a) of the cable film (6) to be removed, which is at least partially adhered to the cable sheath (7), is pulled off.

8. Method according to one of claims 1 to 7, wherein the following steps are carried out:
- inductively heating at least that conductor structure (3, 4, 5a, 5b) to which the cable film (6) is applied;
- at least partially circumferentially cutting into the cable sheath (7);
- joint removal of a section (7a) of the cable sheath (7) to be removed and the section (6a) of the cable film (6) to be removed
in a processing space (11) of a processing device (10).

9. Method according to one of claims 1 to 8, wherein the at least one conductor structure (3, 4, 5) to which the cable film (6) is applied is inductively heated to a temperature greater than or equal to 80°C, preferably greater than or equal to 100°C, particularly preferably greater than or equal to 200°C, in particular greater than or equal to 300°C.

10. Processing device (10) for carrying out a method according to one of claims 1 to 9, comprising:
- a processing space (11) for receiving an end section (1b) of a cable (1) to be processed, wherein the cable (1) comprises a cable sheath (7) and at least one electrically conductive conductor structure (3, 4, 5) and a cable film (6) made of a plastic material applied to one of the conductor structures (3, 4, 5),
wherein the processing space (11) comprises a passage opening (16) for the cable (1);
- an induction coil (12) arranged in the processing space (11);
- means (13) for pulling off a section (6a) of the cable film (6) to be removed which is defined by a damage region (S);
- a cutting unit (14) for at least partially circumferentially cutting into the cable sheath (7),
**characterized in that**
the induction coil (12) is adapted to generate an electromagnetic alternating field to inductively heat at least that conductor structure (3, 4, 5a, 5b) of a section of the cable (1) located in the induction coil (12) during a processing operation, to which conductor structure (3, 4, 5a, 5b) the cable film (6) is applied, so that the cable film (6) applied to the heated conductor structure (3, 4, 5a, 5b) is at least partially thermally damaged in the damage region (S);
**and in that**
the cutting unit (14) is arranged in the processing space (11), wherein the induction coil (12) is arranged between the cutting unit (14) and the passage opening (16), and the cutting unit (14) is adapted to cut into the cable sheath (7) at a position which is arranged closer to a cable end (1a) of the end section (1b) than the damage region (S).

11. Processing device (10) according to claim 10, **characterized in that** at least one clamping unit (15) for fixing the end section (1b) of the cable (1) during a processing operation is arranged in the processing space (11).

12. Processing device (10) according to one of claims 10 to 11, **characterized in that** the means (13) for pulling off the section (6a) of the cable film (6) to be removed are designed to contact a section (7a) of the cable sheath (7) to be removed defined by an incision (9) and subsequently to remove the section (7a) of the cable sheath (7) to be removed together with a section (6a) of the cable film (6a) to be removed by means of a pulling-off movement.

13. Processing device (10) according to one of claims 10 to 12, **characterized in that** the means (13) for pulling off the section (6a) of the cable film (6) to be removed are arranged in the processing space (11).

## Revendications

1. Procédé pour enlever une section à enlever (6a) d'une feuille de câble (6) d'une section terminale (1b) d'un câble (1),
comprenant les étapes suivantes :
- la fourniture d'une section terminale (1b) d'un câble (1) présentant un axe de câble (2), le câble (1) comprenant une gaine de câble (7) ainsi qu'au moins une structure conductrice d'électricité (3, 4, 5) et la feuille de câble (6) en plastique disposée sur une des structures conductrices (3, 4, 5) ;
- la génération d'une zone de dommage (S) définie dans la section terminale (1b) fournie du câble (1), dans laquelle au moins chaque structure conductrice (3, 4, 5a, 5b), sur laquelle est disposée la feuille de câble (6), est chauffée par induction de telle sorte que la feuille de câble (6) disposée sur la structure conductrice chauffée (3, 4, 5a, 5b) est endommagée thermiquement au moins partiellement dans la zone de dommage (S),
la feuille de câble (6) étant recouverte par la gaine de câble (7) dans la zone de dommage (S) pendant le chauffage par induction de l'au moins une structure (3, 4, 5),
- la coupe au moins partiellement circonférentielle de la gaine de câble (7) pendant ou après la génération de la zone de dommage (S), la coupe au moins partiellement circonférentielle s'effectuant sur une position qui est disposée plus près d'une extrémité de câble (1a) de la section terminale (1b) que la zone de dommage (S) ;
- le mouvement de la feuille de câble (6) relativement à une des structures conductrices (3, 4, 5), une fissure se formant dans la zone de dommage (S) en raison du mouvement relatif, fissure qui sépare la section à enlever (6a) de la feuille de câble (6) d'une section (6b) restée sur le câble (1) de la feuille de câble (6).

2. Procédé pour enlever une section à enlever (6a) d'une feuille de câble (6) d'une section terminale (1b) d'un câble (1),
comprenant les étapes suivantes :
- la fourniture d'une section terminale (1b) d'un câble (1) présentant un axe de câble (2), le câble (1) comprenant une gaine de câble (7) ainsi qu'au moins une structure conductrice d'électricité (3, 4, 5) et la feuille de câble (6) en plastique disposée sur une des structures conductrices (3, 4, 5) ;
- la production d'une entaille (9) dans la section terminale (1b) fournie du câble (1) après la coupe au moins partiellement circonférentielle de la gaine de câble (7) ;
- la génération d'une zone de dommage (S) définie dans la section terminale (1b) du câble (1), dans laquelle au moins la structure conductrice (3, 4, 5a, 5b), sur laquelle est disposée la feuille de câble (6), est chauffée par induction de telle sorte que la feuille de câble (6) disposée sur la structure conductrice chauffée (3, 4, 5a, 5b) est endommagée thermiquement au moins partiellement dans la zone de dommage (S),
la zone de dommage (S) étant générée après la production de l'entaille (9),
un écart entre une extrémité de câble (1a) de la section terminale (1b) et la zone de dommage (S) étant plus grand qu'entre l'extrémité de câble (1a) et une position de l'entaille (9),
la feuille de câble (6) étant recouverte par la gaine de câble (7) dans la zone de dommage (S) pendant le chauffage par induction de l'au moins une structure conductrice (3, 4, 5) ;
- le mouvement de la feuille de câble (6) relativement à une des structures conductrices (3, 4, 5), une fissure se formant dans la zone de dommage (S) en raison du mouvement relatif, fissure qui sépare la section à enlever (6a) de la feuille de câble (6) d'une section (6b) restée sur le câble (1) de la feuille de câble (6).

3. Procédé selon la revendication 1 ou 2, dans lequel l'au moins une structure conductrice (3) se compose d'un conducteur intérieur (4) et d'au moins une structure conductrice (5, 5a, 5b) extérieure, la feuille de câble (6) étant disposée sur une des structures conductrices (5, 5a, 5b) extérieures.

4. Procédé selon la revendication 3, dans lequel chaque structure conductrice extérieure (5), sur laquelle est disposé la feuille de câble (6), est configurée comme une feuille métallique (5b).

5. Procédé selon la revendication 4, dans lequel la structure conductrice (5) extérieure configurée comme une feuille métallique (5b) est affaiblie structurellement en raison du chauffage par induction dans la zone de dommage (S).

6. Procédé selon l'une quelconque des revendications 1 à 5, dans lequel le chauffage par induction s'effectue au moyen d'une bobine d'induction (12), au moyen de laquelle (12) un champ alternatif électromagnétique est généré, au moins la zone de dommage (S) du câble (1) étant disposée à l'intérieur de la bobine d'induction (12) pendant le chauffage par induction.

7. Procédé selon l'une quelconque des revendications 1 à 6, dans lequel la gaine de câble (7) est divisée par une entaille (9) produite au moyen de l'étape de la coupe au moins partiellement circonférentielle dans une section à enlever (7a) de la gaine de câble (7) et une section restante (7b) de la gaine de câble (7) et en ce que la section à enlever (7a) de la gaine de câble (7) est déplacée dans la direction de l'axe de câble (2), la section à enlever (6a) de la feuille de câble (6) adhérant au moins partiellement à la gaine de câble (7) étant retirée en raison du mouvement.

8. Procédé selon l'une quelconque des revendications 1 à 7, dans lequel les étapes
- chauffage par induction au moins de la structure conductrice (3, 4, 5a, 5b) sur laquelle la feuille de câble (6) est déposée ;
- la coupe au moins partiellement circonférentielle de la gaine de câble (7) ;
- l'enlèvement commun d'une section à enlever (7a) de la gaine de câble (7) et de la section à enlever (6a) de la feuille de câble (6) sont réalisées dans l'espace d'usinage (11) d'un dispositif d'usinage (10).

9. Procédé selon l'une quelconque des revendications 1 à 8, dans lequel l'au moins une structure conductrice (3, 4, 5), sur laquelle la feuille de câble (6) est déposée, est chauffée par induction à une température égale ou supérieure à 80 °C, de préférence égale ou supérieure à 100 °C, mieux encore égale ou supérieure à 200 °C, notamment égale ou supérieure à 300 °C.

10. Dispositif d'usinage (10) pour la mise en œuvre d'un procédé selon l'une quelconque des revendications 1 à 9 comprenant :
- un espace d'usinage (11) pour la réception d'une section terminale (1b) d'un câble à usiner (1), le câble (1) comprenant une gaine de câble (7) ainsi qu'au moins une structure conductrice d'électricité (3, 4, 5) et une feuille de câble (6) en plastique disposée sur une des structures conductrices (3, 4, 5),
l'espace d'usinage (11) présentant une ouverture de passage (16) pour le câble (1) ;
- une bobine à induction (12) disposée dans l'espace d'usinage (11) ;
- un moyen (13) pour retirer une section à enlever (6a) de la feuille de câble (6) définie par une zone de dommage (S) ;
- une unité de coupe (14) pour la coupe au moins partiellement circonférentielle de la gaine de câble (7),
**caractérisé en ce que**
la bobine à induction (12) est conçue pour générer un champ alternatif électromagnétique afin de chauffer par induction au moins la structure conductrice (3, 4, 5a, 5b) d'une section du câble (1) se trouvant dans la bobine à induction (12) pendant une opération d'usinage, structure conductrice (3, 4, 5a, 5b) sur laquelle est disposée la feuille de câble (6), de telle sorte que la feuille de câble (6) disposée sur la structure conductrice (3, 4, 5a, 5b) chauffée est endommagée thermiquement au moins partiellement dans la zone de dommage (S) ;
**et en ce que**
l'unité de coupe (14) est disposée dans l'espace d'usinage (11), la bobine à induction (12) étant disposée entre l'unité de coupe (14) et l'ouverture de passage (16), et l'unité de coupe (14) est conçue pour couper la gaine de câble (7) à une position qui est située plus près sur l'extrémité de câble (1a) de la section terminale (1b) que la zone de dommage (S).

11. Dispositif d'usinage (10) selon la revendication 10, **caractérisé en ce qu'**au moins une unité de serrage (15) pour fixer la section terminale (1b) du câble (1) pendant une opération d'usinage est disposée dans l'espace d'usinage (11).

12. Dispositif d'usinage (10) selon l'une quelconque des revendications 10 à 11, **caractérisé en ce que** les moyens (13) pour retirer la section à enlever (6a) de la feuille de câble (6) sont configurés pour toucher une section à enlever (7a) de la gaine de câble (7) définie par une entaille (9) puis pour enlever par un mouvement de retrait la section à enlever (7a) de la gaine de câble (7) avec une section à enlever (6a) de la feuille de câble (6a).

13. Dispositif d'usinage (10) selon l'une quelconque des revendications 10 à 12, **caractérisé en ce que** les moyens (13) pour retirer la section à enlever (6a) de la feuille de câble (6) sont disposés dans l'espace d'usinage (11).
